# EUROPÄISCHE PATENTSCHRIFT

(11) **EP 3 180 661 B1**
(45) Veröffentlichungstag und Bekanntmachung des Hinweises auf die Patenterteilung: **04.03.2020**
(21) Anmeldenummer: 14802359.1
(22) Anmeldetag: 13.11.2014
(51) Int. Cl.: G05B 19/042

(54) **PRODUKTIONSMODUL ZUR DURCHFÜHRUNG EINER PRODUKTIONS-FUNKTION AN EINEM PRODUKT**
PRODUCTION MODULE FOR CARRYING OUT A PRODUCTION FUNCTION ON A PRODUCT
MODULE DE PRODUCTION POUR EXÉCUTER UNE FONCTION DE PRODUCTION AU NIVEAU D'UN PRODUIT

(43) Veröffentlichungstag der Anmeldung: 21.06.2017
(73) Patentinhaber: Siemens Aktiengesellschaft, 80333 München (DE)
(72) Erfinder: ZAHORCAK, Vladimir, 900 32 Borinka (SK)
(86) Internationale Anmeldenummer: PCT/EP2014/074503
(87) Internationale Veröffentlichungsnummer: WO 2016/074728

(56) Entgegenhaltungen:
- US-A1- 2004 268 186
- US-B1- 7 069 096
- JENNINGS N R ET AL: "Designing a reusable co-ordination module for co-operative industrial control applications", IEE PROCEEDINGS D. CONTROL THEORY & APPLICATIONS, INSTITUTION OF ELECTRICAL ENGINEERS. STEVENAGE, GB, Bd. 143, Nr. 1, 22. Januar 1996 (1996-01-22), Seiten 91-102, XP006006299, ISSN: 0143-7054, DOI: 10.1049/IP-CTA:19960186

## Beschreibung

Die vorliegende Erfindung betrifft ein Produktionsmodul zur Durchführung einer Produktions-Funktion an einem Produkt, wobei das Produktionsmodul zur Kopplung mit einem zweiten Produktionsmodul ausgebildet und eingerichtet ist, welches zur Durchführung einer zweiten Produktions-Funktion an dem Produkt ausgebildet und eingerichtet ist.

Derartige Produktionsmodule sind aus dem Stand der Technik bekannt. So offenbart beispielsweise die Veröffentlichungsschrift US 2011/0224828 A1 ein System zur Entwicklung von Robotern und anderen so genannten Cyber-Physical-Systems (CPS). Das System umfasst eine Plattform, die die Prozessierung von Aktoren und Sensoren und anderen Modulen ermöglicht. Es werden verschiedene Module offenbart, die für bestimmte, in der Robotik bekannte Aufgaben, verwendbar sind. Dies können beispielsweise der Antrieb von Motoren oder das Auslesen beziehungsweise Steuern von Sensoren sein. Die Module kommunizieren miteinander und mit weiteren Einrichtungen, wie beispielsweise Computern und von Anwendern erstellten Modulen über ein einheitliches Kommunikationsprotokoll.

Weiterhin offenbart die Veröffentlichungsschrift US 2004/0268186A1 ein verteiltes Steuerungssystem für den Betrieb eines Produktionsablaufs, der durch eine Vielzahl von Maschinen ausgeführt wird. Dabei ist jeder der Maschinen ein entsprechender Controller bzw. Computer zugeordnet. Die Offenlegungsschrift offenbart auch ein Verfahren zur Programmierung solcher Controller über ein System von Softwareagenten.

Es ist ein Nachteil des Standes der Technik, dass relativ viel Mitwirkung eines Benutzers bei der Erstellung eines derartigen Systems erforderlich ist.

Daher ist es eine Aufgabe der vorliegenden Erfindung, den Aufbau eines modularen Produktionssystems zu vereinfachen.

Diese Aufgabe wird gelöst von einem Produktionsmodul mit den Merkmalen des vorliegenden Patentanspruchs 1 und von einem Verfahren mit den Merkmalen des vorliegenden Patentanspruchs 13.

Ein derartiges Produktionsmodul ist zur Durchführung einer Produktions-Funktion an einem Produkt ausgebildet und eingerichtet und weiterhin zur Kopplung mit einem zweiten Produktionsmodul. Das zweite Produktionsmodul ist wiederum zur Durchführung einer zweiten Produktions-Funktion an dem Produkt ausgebildet und eingerichtet. Dabei ist in einer Speichereinrichtung des Produktionsmoduls eine Selbstbeschreibungs-Information bezüglich Eigenschaften des Produktionsmoduls gespeichert und weiterhin umfasst das zweite Produktionsmodul eine zweite Selbstbeschreibungs-Information bezüglich Eigenschaften des zweiten Produktionsmoduls. Das Produktionsmodul ist zum Übertragen der Selbstbeschreibungs-Information an das zweite Produktionsmodul und zum Empfang der zweiten Selbstbeschreibungs-Information vom zweiten Produktionsmodul ausgebildet und eingerichtet. In der Speichereinrichtung des Produktionsmoduls ist weiterhin eine Port-Information bezüglich der Kopplung mit dem zweiten Produktionsmodul gespeichert. Alternativ oder weiterhin kann das Produktionsmodul zur Speicherung einer entsprechenden Port-Information bezüglich der Kopplung mit dem zweiten Produktionsmodul ausgebildet und eingerichtet sein.

Über das Vorliegen der Selbstbeschreibungs-Informationen des ersten und zweiten Produktionsmoduls und der Möglichkeit, diese gegenseitig aneinander zu übertragen und das gleichzeitige Vorliegen einer Port-Information bezüglich der Kopplung mit dem zweiten Produktionsmodul im ersten Produktionsmodul, liegt sowohl Information über die Fähigkeiten der Module als auch eine Information über eine Kopplung mit dem zweiten Produktionsmodul im Produktionsmodul vor. Damit kann das erste Produktionsmodul beispielsweise in eine Lage versetzt werden, zur der Behandlung oder Bearbeitung eines Produkts mit relativ wenig oder auch ohne eine Benutzereinwirkung mit dem zweiten Produktionsmodul zusammen zu arbeiten. Auf diese Weise wird der Aufbau eines beispielsweise die zwei Produktionsmodule umfassenden Produktionssystems vereinfacht.

Produktionsmodule können verschiedenste mechanische, elektromechanische oder elektronische Einrichtungen sein, die zur Behandlung, Bewegung, Verarbeitung und/oder Bearbeitung eines Gegenstands, Werkstücks, einer Flüssigkeit oder vergleichbaren Produkten, Baugruppen oder Materialien eingerichtet und ausgebildet sind. Produktionsmodule können beispielsweise Werkzeugmodule, Werkmaschinen (z.B. zum Fräsen, Bohren, Stanzen, Pressen, o.ä.) oder ähnliche Werkzeuge, Geräte oder Maschinen oder auch Elemente davon sein. Weiterhin können Produktionsmodule auch zum zumindest unter Anderem Transport von Produkten, Baugruppen oder Materialien ausgebildet und eingerichtet sein, beispielsweise als Förderband, Kran, Roboterarm, Pumpe oder Ähnliches. Weiterhin können Produktionsmodule auch zur Lagerung oder Zufuhr entsprechender Produkte ausgebildet und eingerichtet sein (z.B. umfassend ein Regalsystem, Tank, o.ä.). Das Produktionsmodul kann auch beispielsweise zum Erhitzen oder auch sonstigen Bearbeiten von Werkstücken, Baugruppen und/oder festen, flüssigen oder gasförmigen Materialien ausgebildet und eingerichtet sein, z.B. als Ofen, Kessel, Ventil, Rührer, o.Ä..
Das Produktionsmodul selbst kann wiederum aus mehreren Teilen, Baugruppen und/oder Unter-Modulen aufgebaut sein und/oder beispielsweise eine oder mehrere mechanische und/oder elektronische Untereinheiten aufweisen.
Ein Produktionsmodul kann beispielsweise eine Steuereinheit oder einen Controller zur Steuerung der Produktionsfunktion und/oder der in der vorliegenden Beschreibung in Bezug auf das Produktionsmodul beschriebenen Verfahren, Vorgänge und Ermittlungen ausgebildet und eingerichtet sein. Weiterhin kann das Produktionsmodul ein oder mehrere Kommunikationsschnittstellen sowie ein oder mehrere Speichereinrichtungen zur Speicherung von Daten und/oder Informationen umfassen. Zur Durchführung der Produktions-Funktion kann das Produktionsmodul zudem entsprechende mechanische, elektrische, elektronische und/oder elektromechanische oder optische Komponenten umfassen.
Insbesondere kann das Produktionsmodul als ein so genanntes "Cyber-Physical-Systems" (CPS) oder ein Teil davon ausgebildet und eingerichtet sein. So kann das Produktionsmodul beispielsweise als ein so genanntes "Cyber-Physical-Module" (CPM) oder ein "Cyber-Physical-Production-Module" (CPPM) ausgebildet und eingerichtet sein.

Unter einer Produktions-Funktion wird im Rahmen der vorliegenden Beschreibung allgemein jeder Vorgang, der im Rahmen der Produktion, Herstellung, Verarbeitung, Behandlung oder Bearbeitung eines Gegenstands, eines Materials oder eines Stoffes durchgeführt wird beziehungsweise durchgeführt werden kann. Eine Produktions-Funktion kann dabei z.B. jeder mögliche Arbeitsschritt bezüglich eines beliebigen Produktes von den Ausgangsstoffen bis zum fertigen Endprodukt sein.

Beispielsweise kann eine Produktions-Funktion jegliche Art von Material-Bearbeitung (z.B. Fräsen, Bohren, Schleifen, Pressen, Lackieren, Gießen, Pumpen, Erhitzen, Bewegen, Öffnen, Schließen, usw.), jegliche Art von Transport oder Bewegung oder Handhabung eines Gegenstands, einer Baugruppe, eines Materials oder eines Stoffes sein oder derartige Vorgänge umfassen. Weiterhin kann die Produktions-Funktion beispielsweise eine Lagerung, Diagnose, Prüfung, optische Aufnahme, Vermessung, Bestimmung einer Form, Lage oder Größe oder vergleichbare Funktionalitäten sein, beziehungsweise derartige Funktionalitäten umfassen.

Ein Produkt kann beispielsweise als ein mechanisches, optisches, elektromechanisches, elektronisches oder vergleichbares Produkt beziehungsweise Baugruppe ausgebildet und eingerichtet sein beziehungsweise derartige Produkte beziehungsweise Baugruppen umfassen. Weiterhin kann das Produkt beispielsweise als ein Werkstück, eine Baugruppe, ein festes, flüssiges oder gasförmiges Material, eine feste, flüssige oder gasförmige Chemikalie oder Ähnliches, ausgebildet sein. Das Produkt kann beispielsweise auch jegliche Art von Zwischenprodukt oder auch das Endprodukt eines bestimmten Produktionsvorgangs sein. Endprodukte können beispielsweise alle Arten von Produkten sein, die kommerziell vertrieben werden, z.B. ein Mikrochip, ein Computer, eine Kamera, ein Auto, eine Chemikalie, ein Stoff, usw., beziehungsweise auch jegliche Arten von Zwischenprodukten für derartige Produkte.

Im Rahmen der vorliegenden Beschreibung wird der Begriff "Produkt" als eine abstrakte Beschreibung eines im Rahmen einer Produktion oder Bearbeitung durchaus veränderlichen Gegenstands verwendet. Ein "Produkt" im Sinne der vorliegenden Beschreibung kann sich im Laufe eines Produktionsprozesses, beispielsweise durch die Einwirkung von Produktions-Funktionen, in seiner äußeren oder inneren Erscheinung oder Ausgestaltung durchaus verändern.

Die Kopplung des Produktionsmoduls mit dem zweiten Produktionsmodul kann derart ausgebildet und eingerichtet sein, dass die Produktions-Funktion des Produktionsmoduls und die zweite Produktionsfunktion des zweiten Produktionsmoduls zusammenwirken können beziehungsweise zusammenwirken. Ein derartiges Zusammenwirken von Produktions-Funktionen kann beispielsweise eine gemeinsame Bearbeitung eines Produkts, eine Bearbeitung und einen Transports eines Produkts oder auch eine Übergabe eines Produkts von einer zu einer weiteren Transporteinheit sein. Zwei Produktionsmodule können dazu beispielsweise in einer geeigneten geometrischen Anordnung befindlich sein und z.B. elektronisch derart gekoppelt, dass das Zusammenwirken der Produktions-Funktionen ermöglicht beziehungsweise durchgeführt wird oder durchführbar ist.

Die Kopplung des Produktionsmoduls mit dem zweiten Produktionsmodul kann beispielsweise als eine kommunikative Kopplung über entsprechende drahtgebundene oder drahtlose Kommunikationsschnittstellen (z.B. über Ehternet, Profinet, Profibus, Feldbusse, WLAN, Bluetooth, NFC usw.) ausgebildet und eingerichtet sein beziehungsweise eine derartige kommunikative Kopplung umfassen.

Weiterhin kann die Kopplung der Produktionsmodule auch eine mechanische Kopplung, z.B. über entsprechende Verbindungselemente, umfassen. Für eine derartige mechanische Kopplung kann ein Produktionsmodul beispielsweise entsprechende Verbindungselemente, Sensoren und/oder Aktoren aufweisen beziehungsweise umfassen.

Das zweite Produktionsmodul kann beispielsweise entsprechend dem in der vorliegenden Beschreibung beschriebenen Produktionsmodul beziehungsweise ersten Produktionsmodul ausgebildet und eingerichtet sein. Weiterhin können die Produktionsmodule jeweils mit weiteren Produktionsmodulen gekoppelt sein, die wiederum jeweils entsprechend einem Produktionsmodul beziehungsweise einem ersten Produktionsmodul gemäß der vorliegenden Beschreibung ausgebildet und eingerichtet sein können. Dabei kann die Kopplung mit den jeweils anderen Produktionsmodulen auch wie in der vorliegenden Beschreibung näher erläutert ausgebildet und eingerichtet sein.

Die Selbstbeschreibungs-Information bezüglich Eigenschaften des Produktionsmoduls kann beispielsweise die verschiedensten Informationen bezüglich der Produktions-Funktion des Produktionsmoduls umfassen. Insbesondere kann es beispielsweise eine Kennung beziehungsweise Charakterisierung der Funktionalität beziehungsweise Funktionalitäten umfassen, welche in der Produktions-Funktion realisiert ist bzw. sind. Weiterhin können sie Informationen über be- oder verarbeitbare Materialien beziehungsweise Gegenstände, Informationen über Größen-, Form-, Gewichts- oder ähnliche Vorgaben oder Voraussetzungen, Informationen über einen oder mehrere Bearbeitungsbereiche des Produktionsmoduls, Informationen über Qualitätskriterien, -ergebnisse und/oder Voraussetzungen bezüglich der Produktionsfunktion beziehungsweise des entsprechenden Arbeitsergebnisses oder Produkts oder ähnliche Informationen bezüglich der Produktions-Funktion umfassen.

Die Selbstbeschreibungs-Information kann zudem Information über sonstige Eigenschaften des Produktionsmoduls, wie beispielsweise eine Größe, eine Geometrie, eine Lage, eine Identifikations-Kennung, ein Aufbau, eine Konfiguration, verfügbare Services und Funktionaltitäten, angeschlossene Geräte, Module und/oder Baugruppen, verfügbare Steuer- und sonstige Kommandos sowie verfügbare Kommunikations-Schnittstellen, entsprechende Kommunikations-Parameter (MAC-Adresse o.Ä.) und/oder eine Zustands-Information bezüglich des Produktionsmoduls umfassen.

Die Selbstbeschreibungs-Information bezüglich Eigenschaften des zweiten Produktionsmoduls sowie auch bezüglich weiterer in der vorliegenden Beschreibung genannter Produktionsmodule kann entsprechend den vorstehenden Ausführungen ausgestaltet und eingerichtet sein.

Das Übertragen der Selbstbeschreibungs-Information zwischen den Produktionsmodulen kann beispielsweise als drahtgebundene und/oder drahtlose Kommunikation erfolgen beziehungsweise ausgestaltet und eingerichtet sein. Eine derartige Übertragung kann beispielsweise über Ethernet, Feldbusse, WLAN, Bluetooth, NFC, optisch oder Ähnliches erfolgen beziehungsweis ausgestaltet und eingerichtet sein. Bei der Kopplung des zweiten Produktionsmoduls mit dem ersten kann beispielsweise vorgesehen sein, dass die zweite Selbstbeschreibungs-Information des zweiten Produktionsmoduls an das Produktionsmodul gesendet wird. Weiterhin kann auch die Selbstbeschreibungs-Information des Produktionsmoduls an das zweite Produktionsmodul gesendet werden. Auch ein Austausch der Stellenbeschreibungs-Informationen zwischen Produktionsmodul und zweitem Produktionsmodul kann vorgesehen sein.

Die im ersten Produktionsmodul gespeicherte Port-Information bezüglich der Kopplung mit dem zweiten Produktionsmodul kann beispielsweise eine Information über die zweite Produktions-Funktion des zweiten Produktionsmoduls umfassen. Weiterhin kann die Port-Information eine Information über eine Wechselwirkung der Produktionsfunktion des Produktionsmoduls und der zweiten Produktionsfunktion des zweiten Produktionsmoduls umfassen. Derartige Informationen können beispielsweise Informationen über einen Übergabe-Bereich oder WechselwirkungsBereich sein, in welchem sich beispielsweise ein Produkt befinden muss oder kann, um eine derartige Wechselwirkung der Produktions-Funktionen zu ermöglichen.

Derartige Wechselwirkungen können beispielsweise eine gemeinsame Bearbeitung eines Produkts, eine Bearbeitung eines in einem Transport-Modul befindlichen Produkts oder die Übergabe zwischen zwei Transport-Modulen sein.

Weiterhin kann die Port-Information die zweite Selbstbeschreibungs-Information des zweiten Produktionsmoduls ganz oder ihn teilweise umfassen. Weiterhin kann die Port-Information auch Informationen über weitere, über das zweite Produktionsmodul erreichbare Module, Produktions-Funktionen und/oder Funktionalitäten umfassen. Derartige Informationen über solche weiteren Module beziehungsweise Produktionsfunktionen können den vorstehend genannten Informationen bezüglich des zweiten Produktionsmoduls entsprechen.

Weiterhin kann das Produktionsmodul unmittelbar noch mit einem oder mehreren weiteren Produktionsmodulen gemäß der vorliegenden Beschreibung gekoppelt sein, wobei weiterhin vorgesehen sein kann, dass für jedes der unmittelbar mit dem Produktionsmodul verbundenen weiteren Produktionsmodule eine entsprechende Port-Information bezüglich der Kopplung mit dem jeweiligen Produktionsmodul im Produktionsmodul gespeichert wird oder ist. Diese Port-Information kann entsprechend der vorstehend beschriebenen Port-Information bezüglich der Kopplung mit dem zweiten Produktionsmodul ausgestaltet und eingerichtet sein.

Die Ermittlung der Port-Information bezüglich der Kopplung mit dem zweiten oder auch weiteren Produktionsmodulen kann beispielsweise im Produktionsmodul erfolgen, oder auch in einem externen Rechner oder einer vergleichbaren Einrichtung, und dann an das Produktionsmodul übertragen werden. Unter der "Ermittlung" wird hier beispielsweise eine reine Datenextraktion aus entsprechenden Nachrichten oder das Auslesen entsprechender Informationsdaten, aber auch die Verarbeitung übermittelter oder übertragener Daten oder Informationen verstanden.

In einer vorteilhaften Ausgestaltung kann die Port-Information bezüglich der Kopplung mit dem zweiten Produktionsmodul eine Information über einen räumlichen Wechselwirkungsbereich des Produktionsmoduls mit dem zweiten Produktionsmodul umfassen, wobei der räumliche Wechselwirkungsbereich dadurch gekennzeichnet ist, dass sowohl die Produktions-Funktion des Produktionsmoduls, als auch die zweite Produktions-Funktion des zweiten Produktionsmoduls an dem Produkt wirken kann, wenn es sich im Wechselwirkungsbereich befindet.

Die Information über den Wechselwirkungsbereich kann es den Produktionsmodulen z.B. ermöglichen, mit reduzierter oder auch ohne Benutzermitwirkung zusammen zu arbeiten, da dem Produktionsmodul bekannt ist, in welchem räumlichen Bereich sich das zu bearbeitende oder zu handhabende Produkt oder Material befinden muss, um sowohl selbst, als auch durch das zweite Produktionsmodul bearbeitet oder gehandhabt zu werden. Auf diese Weise wird der Aufbau und Betrieb eines entsprechenden Produktionssystems weiter vereinfacht.

Insbesondere kann vorgesehen sein, dass der Wechselwirkungsbereich auf Grund der Selbstbeschreibungsinformation des Produktionsmoduls sowie der zweiten Selbstbeschreibungsinformation des zweiten Produktionsmoduls ermittel wird oder ermittelbar ist. Diese Ermittlung kann beispielsweise im Produktionsmodul, im zweiten Produktionsmodul und/oder in einer externen Rechner oder ähnlichen Einrichtung erfolgen.

Zu diesem Zweck kann beispielsweise in den jeweiligen Selbstbeschreibungs-Informationen jeweils ein Arbeitsbereich der jeweiligen Module abgelegt sein und dann der Wechselwirkungsbereich über die Kenntnis der jeweiligen Arbeitsbereiche sowie der relativen Lage der Produktionsmodule zueinander ermittelt werden. Dabei kann die Information zur relativen Lage der der Produktionsmodule beispielsweise vorgegeben oder vorgebbar sein oder auch automatisch oder durch einen Benutzer ermittelt werden. In einer vorteilhaften Ausgestaltung kann weiterhin vorgesehen sein, dass auch im zweiten Produktions-Modul eine Information über den Wechselwirkungsbereich gespeichert ist, wobei beispielsweise die Information vom Produktionsmodul an das zweite Produktionsmodul übertragen werden kann oder auch vom zweiten Produktionsmodul beziehungsweise einer weiteren Rechnereinrichtung gesondert ermittelt werden. Dabei könnte dann beispielsweise ein Abgleich der verschiedenen berechneten Wechselwirkungsbereiche, beispielsweise zur Verbesserung der Kopplung, erfolgen.
Die Port-Information kann dann beispielsweise eine Information über eine Geometrie des Wechselwirkungsbereichs und/oder eine Position des Wechselwirkungsbereichs umfassen. Dabei können Geometrie und/oder Position in entsprechenden Modul-Koordinaten oder einem anderen Koordinatensystem, beispielsweise einem für beide Produktionsmodule gemeinsamen Koordinatensystem gespeichert sein.

Ein zusätzliches Beispiel besteht aus einem Produktionsmodul zur Durchführung einer Produktions-Funktion an einem Produkt, wobei in einer Speichereinrichtung des Produktionsmoduls eine Selbstbeschreibungs-Information bezüglich Eigenschaften des Produktionsmoduls gespeichert oder speicherbar ist, wobei weiterhin das Produktionsmodul zur Ermittlung eines gemeinsamen räumlichen Wechselwirkungsbereichs mit einem mit dem Produktionsmodul gekoppelten zweiten Produktionsmodul ausgebildet und eingerichtet ist, wobei das zweite Produktionsmodul zur Durchführung einer zweiten Produktions-Funktion an dem Produkt ausgebildet und eingerichtet ist und wobei weiterhin der gemeinsame räumliche Wechselwirkungsbereich der Produktionsmodule dadurch gekennzeichnet ist, dass sowohl die Produktions-Funktion des Produktionsmoduls als auch die zweite Produktion-Funktion des zweiten ProduktionsModuls an dem Produkt wirken kann, wenn es sich im Wechselwirkungsbereich befindet.

Ein derart ausgebildetes Produktionsmodul vereinfacht den Aufbau eines Systems aus derartigen Produktionsmodulen, indem z.B. über die Ermittlung des Wechselwirkungsbereichs im Produktionsmodul der Kopplungsaufwand zwischen zwei Produktionsmodulen reduziert wird, indem über die Ermittlung des Wechselwirkungsbereichs eine Kooperation beider Module ermöglicht beziehungsweise vereinfacht wird.

Dabei können das Produktionsmodul, die Produktions-Funktion, die Selbstbeschreibungs-Information bezüglich der Eigenschaften des Produktionsmoduls sowie das zweite Produktionsmodul mit der entsprechenden zweiten Produktions-Funktion sowie der Wechselwirkungsbereich und die Ermittlung des Wechselwirkungsbereichs gemäß der vorliegenden Beschreibung, ausgebildet und eingerichtet sein.

Die Ermittlung des gemeinsamen räumlichen Wechselwirkungsbereichs mit dem zweiten Produktionsmodul kann beispielsweise mit Hilfe von vom zweiten Modul übertragenen Daten bezüglich eines verfügbaren Arbeitsbereichs des zweiten Moduls in Zusammenwirkung mit z.B. in der Selbstbeschreibungs-Information des Produktionsmoduls gespeicherten Informationen zum eigenen Arbeitsbereich ermittelt werden. Zusätzlich können für diese Ermittlung beispielsweise zusätzliche Lage-Informationen bezüglich einer Lage, Position und/oder Ausrichtung beider Module relativ zueinander verwendet werden. Alternativ kann beispielsweise der Wechselwirkungsbereich auch aus bekannten oder ermittelten Positions-, Lage- und/oder Ausrichtungsdaten des Produktionsmoduls und des zweiten Produktionsmoduls ermittelt werden. Insbesondere können dabei vorbekannte Eigenschaften und Ausgestaltungen des Produktionsmoduls und/oder des zweiten Produktionsmoduls einfließen.

Die Lage beziehungsweise relative Lage beider Produktionsmodule kann beispielsweise von einem Bediener angegeben oder auch ermittelt werden (z.B. über Roboterarme, Sensoren u.Ä.) oder mit Hilfe von Positionsbestimmungs-Systemen wie beispielsweise GPS, Kameras, optische Sensoren, Funkt-Sensorik, Ultraschall-Sensorik oder vergleichbaren Systemen beziehungsweise Kombinationen derartiger Systeme ermittelt werden.

Die Ermittlung des gemeinsamen räumlichen Wechselwirkungsbereichs kann beispielsweise durch einen Benutzer ausgelöst werden oder auch selbsttätig bei einer Kopplung der Module oder auch selbsttätig bei jeder Kopplung und/oder Lageveränderung oder sonstiger Änderungen bezüglich mindestens eines der Module.

Die Ausgestaltung des Wechselwirkungsbereichs kann derart erfolgen, dass das Produktionsmodul und das zweite Produktionsmodul mit ihren jeweiligen Produktions-Funktionen bezüglich des Produkts zusammenwirken können beziehungsweise zusammenwirken. Ein derartiges Zusammenwirken kann beispielsweise als eine gemeinsame Bearbeitung oder Behandlung des Produkts, eine Bearbeitung oder Behandlung eines Produkts, welches über ein geeignetes Transportsystem in eine für die Behandlung beziehungsweise Bearbeitung vorgesehene Lage positioniert ist oder auch eine Übergabe zwischen für den Material-, Gegenstands- beziehungsweise Produkt-Transport vorgesehenen Produktionsmodulen. Weitere Möglichkeiten für ein Zusammenwirken der Produktions-Funktionen ergeben sich aus den beispielhaft in der vorliegenden Beschreibung gegebenen verschiedenen Ausgestaltungsmöglichkeiten für die Produktions-Funktionen.

Die Kopplung des Produktionsmoduls mit dem zweiten Produktionsmodul kann beispielsweise wie in der vorliegenden Beschreibung näher ausgeführt, eingerichtet und ausgebildet sein.

In einer vorteilhaften Ausgestaltung ist in der Speichereinrichtung des Produktionsmoduls eine Port-Information bezüglich der Kopplung mit dem zweiten Produktionsmodul gespeichert oder speicherbar, wobei die Port-Information eine Information über den räumlichen Wechselwirkungsbereich des Produktionsmoduls mit dem zweiten Produktionsmodul umfasst. Insbesondere umfasst die Information über den räumlichen Wechselwirkungsbereich eine Information über eine Geometrie des Wechselwirkungsbereichs und/oder eine Position des Wechselwirkungsbereichs.

Auf diese Weise wird die Information über das Zusammenwirken der Produktionsmodule sinnvoll abgelegt und ausgestaltet, was die Einrichtung eines entsprechenden Produktionssystems aus derartigen Modulen weiter vereinfacht, indem sie beispielsweise eine Teilautomatisierung oder auch Automatisierung einer Kopplung zweier Module ermöglichen kann.

Die Port-Information, der räumliche Wechselwirkungsbereich der Produktionsmodule sowie die Information über Geometrie und Position des Wechselwirkungsbereichs kann wie in der vorliegenden Beschreibung näher ausgeführt, eingerichtet und ausgestaltet sein.

Insbesondere kann eine Position des Wechselwirkungsbereichs beispielsweise in entsprechenden Modul-Koordinaten oder auch einem weiteren Koordinatensystem, beispielsweise einem gemeinsamen Koordinatensystem der Module, angegeben und/oder abgelegt sein. Gleiches gilt für Geometrie, beispielsweise die räumliche Ausgestaltung, des Wechselwirkungsbereichs.

Allgemein kann ein Produktionsmodul gemäß der vorliegenden Beschreibung vorteilhafter Weise derart ausgestaltet und eingerichtet sein, das die Port-Information bezüglich der Kopplung mit dem zweiten Produktionsmodul eine Information bezüglich Eigenschaften des zweiten Produktionsmoduls umfasst. Insbesondere kann die Port-Information diesbezüglich Informationen bezüglich der zweiten Produktions-Funktion des zweiten Produktionsmoduls umfassen.

Über eine derartige, in der Port-Information bezüglich der Kopplung mit dem zweiten Produktionsmodul gespeicherte Information, ist es beispielsweise möglich, bereits vorzuplanen, welche weiteren Möglichkeiten der Bearbeitung oder des Transports für ein am Produktionsmodul befindliches Produkt über die Kopplung mit dem zweiten Produktionsmodul möglich wird. Dies ermöglicht eine Produktionsplanung bezüglich des Produkts und vereinfacht damit Aufbau und Betrieb eines Produktionssystems aus derartigen Produktionsmodulen.

Dabei können die Informationen bezüglich Eigenschaften des zweiten Produktionsmoduls entsprechend der Informationen bezüglich Eigenschaften des Produktionsmoduls ausgebildet und eingerichtet sein. Beispielsweise können die Informationen bezüglich der Eigenschaften des zweiten Produktionsmoduls eine Information über dessen Größe, Lage und/oder Position, Identifikations-Kenngrößen oder Parameter, Informationen über Kommunikationsschnittstellen und gegebenenfalls entsprechende Parameter solcher Schnittstellen (z.B. eine MAC-Adresse), verfügbare Produktions- oder andere Funktionen und/oder Services des zweiten Produktionsmoduls und vergleichbare Informationen umfassen.

In einer vorteilhaften Ausgestaltung kann die im Produktionsmodul gespeicherte Port-Information bezüglich der Kopplung mit dem zweiten Produktionsmodul Informationen bezüglich Eigenschaften von mit dem zweiten Produktionsmodul unmittelbar und/oder mittelbar verbundenen weiteren Produktionsmodulen umfassen. Insbesondere kann die im Produktionsmodul gespeicherte Port-Information bezüglich der Kopplung mit dem zweiten Produktionsmodul Informationen bezüglich Produktions-Funktionen von mit dem zweiten Produktionsmodul unmittelbar und/oder mittelbar verbundenen Produktionsmodulen umfassen.

Auf diese Weise lässt sich der Aufbau und der Betrieb eines Produktionssystems aus derartigen Produktionsmodulen weiter vereinfachen, indem bei in einem bestimmten Produktionsmodul befindlichen Produkt bereits über die Port-Information bezüglich eines gekoppelten zweiten Produktionsmoduls erkennbar ist, welche weiteren Produktionsmodule und/oder Produktions-Funktionen über eine Kopplung beziehungsweise Zusammenwirkung mit dem zweiten Produktionsmodul verfügbar oder erreichbar sind.

Dabei können Eigenschaften von mit dem zweiten Produktionsmodul verbundenen weiteren Produktionsmodulen solche Eigenschaften sein, wie sie beispielsweise bezüglich Selbstbeschreibungs-Informationen eines Produktionsmoduls in der vorliegenden Beschreibung an anderer Stelle näher ausgeführt sind.

Insbesondere kann die Port-Information bezüglich der Kopplung mit dem zweiten Produktionsmodul Eigenschaften bezüglich aller mit dem zweiten Produktionsmodul unmittelbar und/oder mittelbar verbundenen weiteren Produktionsmodule umfassen. Weiterhin können die gespeicherten Informationen bezüglich der Eigenschaften der weiteren Produktionsmodule auch auf bestimmte Kategorien von Produktionsmodulen, technischen Einschränkungen, räumlichen Einschränkungen oder auch funktionalen Einschränkungen umfassen.

Dabei sind mit dem zweiten Produktionsmodul unmittelbar verbundene weitere Produktionsmodule solche Module, welche über eine unmittelbare Kopplung beziehungsweise Anbindung an das zweite Produktionsmodul verfügen. Mittelbar verbundene weitere Produktionsmodule sind solche, welche keine unmittelbare Kopplung zum zweiten Produktionsmodul aufweisen, sondern wiederum über zu andere Produktionsmodule vom zweiten Produktionsmodul aus erreichbar sind.

Zwei Produktionsmodule sind unmittelbar verbunden, wenn die Module beispielsweise "wirksam" verbunden sind, wenn also beispielsweise ihre Produktionsfunktionen gemäß der vorliegenden Beschreibung - wie bereits erläutert - zusammenwirken beziehungsweise zusammenwirken können. Insbesondere sind sie unmittelbar verbunden, wenn sie gemäß der vorliegenden Beschreibung gekoppelt sind oder werden. So können beispielsweise zwei verbundene Transportmodule einen durchgehenden Transport eines Produkts mit einer entsprechenden Übergabe zwischen den Modulen ermöglichen. Eine mit einem weiteren Modul verbundene Bearbeitungseinheit kann dann beispielsweise eine Bearbeitung eines im anderen Modul befindlichen Produkts oder eine mit dem anderen Modul gemeinsame Bearbeitung ermöglichen.

Weiterhin kann die im Produktionsmodul gemäß der vorliegenden Beschreibung gespeicherte Selbstbeschreibungs-Information eine Konfigurations-Information bezüglich einer Lage und/oder Ausgestaltung des Produktionsmoduls umfassen.

Die Selbstbeschreibungs-Information kann auch eine Fähigkeits-Information bezüglich verfügbarer Funktionen und Services des Produktionsmoduls umfassen, wobei diese beispielsweise eine Information über die Produktions-Funktion umfassen kann.

Weiterhin kann die Selbstbeschreibungs-Information auch eine Befehls-Information bezüglich vom Produktionsmodul ausführbarer oder verstehbarer Befehle sowie einstellbarer oder eingestellter Parameter umfassen.

Zudem kann die Selbstbeschreibungs-Information auch eine Zustandsinformation bezüglich eines Arbeitszustands umfassen. Dabei kann ein Arbeitszustand beispielsweise einen aktuellen Betriebszustand (voll funktional aktiv, teilweise funktional aktiv, inaktiv, Notbetrieb, o.Ä.) oder auch Informationen bezüglich aufgetretener Fehler und Warnungen oder Ähnlichem umfassen. Die Zustandsinformation kann weiterhin eine Information über ein im bzw. am Produktionsmodul vorhandenes Produkt (z.B. eine entsprechende Produkt-ID, ein aktueller Bearbeitungs-Zustand, eine aktuelle Position innerhalb der Produktionsmoduls, o.ä.) umfassen.

Die Konfigurations-Information des Produktionsmoduls kann beispielsweise eine Position, eine funktionale Ausgestaltung und/oder eine geometrische Ausgestaltung des Produktionsmoduls umfassen. Weiterhin kann die Konfigurations-Information des Produktionsmoduls auch einen verfügbaren und/oder zugänglichen räumlichen Arbeitsbereich oder ein physikalisches und sonstiges Umfeld (z.B. benachbarte Module, Maschinen, Sicherheitsbereiche, o.Ä.) umfassen.

Die im Produktionsmodul gespeicherte Port-Information bezüglich der Kopplung mit dem zweiten Produktionsmodul kann Informationen bezüglich Eigenschaften eines mit dem zweiten Produktionsmodul gekoppelten dritten Produktionsmodul umfassen, wobei das dritte Produktionsmodul mit dem zweiten Produktionsmodul gekoppelt ist, im dritten Produktionsmodul eine dritte Selbstbeschreibungsinformation bezüglich Eigenschaften des dritten Produktionsmoduls gespeichert oder speicherbar ist und das dritte Produktionsmodul zur Durchführung einer dritten Produktions-Funktion an dem Produkt ausgebildet und eingerichtet ist.

Dabei kann die Information bezüglich der Eigenschaften des mit dem zweiten Produktionsmodul gekoppelten dritten Produktionsmoduls eine Information bezüglich der dritten Produktions-Funktion des dritten Produktionsmoduls umfassen und weiterhin die Kopplung des dritten Produktionsmoduls mit dem zweiten Produktionsmodul gemäß der in der vorliegenden Beschreibung erläuterten Kopplung zwischen Produktionsmodul und zweiten Produktionsmodul ausgebildet und eingerichtet sein. Die Selbstbeschreibungsinformation des dritten Produktionsmoduls beziehungsweise die dritte Produktions-Funktion dieses Moduls kann weiterhin gemäß den entsprechenden Informationen beziehungsweise Funktionen des Produktionsmoduls oder zweiten Produktionsmoduls gemäß der vorliegenden Beschreibung ausgebildet und eingerichtet sein.

Informationen über das dritte Produktionsmodul können beispielsweise an das Produktionsmodul gelangen, indem z.B. die Selbstbeschreibungsinformation beziehungsweise Teile davon über das zweite Produktionsmodul an das Produktionsmodul übertragen werden und dort im Rahmen der gespeicherten Port-Information insgesamt, in Auszügen oder nach entsprechender Be- oder Verarbeitung gespeichert werden.

Weiterhin kann auch vorgesehen sein, dass auch weitere oder auch alle mittelbar oder unmittelbar mit dem zweiten Produktionsmodul verbundene Produktionsmodule derartige Selbstbeschreibungs-Informationen umfassen und diese über das zweite Produktionsmodul zum Produktionsmodul übertragbar sind beziehungsweise übertragen werden. Auf diese Weise kann eine entsprechende Information zu diesen weiteren Produktionsmodulen ebenfalls in der Port-Information bezüglich der Kopplung mit dem zweiten Produktionsmodul gespeichert werden. Auf diese Weise können Informationen über Funktionalitäten, Eigenschaften, Zustände oder weitere Parameter von mehreren oder auch allen über das zweite Produktionsmodul weiterhin zugänglichen Produktionsmodule ebenfalls im Produktionsmodul verfügbar sein.

Dies ermöglicht eine weiterhin vereinfachte Konstruktion beziehungsweise einen weiterhin vereinfachten Betrieb eines entsprechenden Produktionssystems aus derartigen Produktionsmodulen, da auf diese Weise eine verbesserte Planung über weitere Produktionsschritte, die mit einem im Produktionsmodul befindlichen Produkt durchgeführt werden sollen, möglich ist.

Die vorstehend genannte Aufgabe wird auch gelöst durch ein Produktionssystem zur Herstellung eines End- oder Zwischenprodukts, wobei das Produktionssystem eine Mehrzahl von Produktionsmodulen gemäß der vorliegenden Beschreibung umfasst und wobei die Mehrzahl von Produktionsmodulen zumindest Teilweise gemäß der vorliegenden Beschreibung untereinander gekoppelt sind.

Dadurch, dass die Produktionsmodule des Produktionssystems jeweils eine Selbstbeschreibungs-Information und eine Port-Information oder Information über einen Wechselwirkungsbereich mit einem benachbarten bzw. gekoppelten Modul umfassen, wird der Aufbau und Betrieb eines solchen Produktionssytems vereinfacht, da die Koordinierung und Kooperation der Module untereinander über die genannten Informationen, wie in der vorliegenden Beschreibung bereits näher ausgeführt, vereinfacht wird.

Unter einem Zwischen- oder Endprodukt wird allgemein jedes Ergebnis eines Produktionsprozesses, ob als vermarktbares oder auch nur innerhalb eines Produktionsprozesses vorliegendes Zwischenprodukt verstanden. Wie schon im Rahmen des Begriffs "Produkt" erläutert, kann auch ein Zwischen- oder Endprodukt ein beliebiger Gegenstand, eine Baugruppe, ein Material, eine Chemikalie oder Ähnliches sein.

Die Mehrzahl von Modulen kann beispielsweise zwei oder mehr Module, bevorzugt mindestens drei bis zehn Module oder auch mehr umfassen.

Das Produktionssystem kann weiterhin derart ausgestaltet und eingerichtet sein, dass in jedem der Produktionsmodule der Mehrzahl von gekoppelten Produktionsmodulen eine Port-Information gemäß der vorliegenden Beschreibung für jedes unmittelbar mit diesem Produktionsmodul gekoppelte Produktionsmodul aus der Mehrzahl der Produktionsmodule gespeichert ist oder wird. Dies kann beispielsweise bedeuten, dass für jedes mit einem der Produktionsmodule unmittelbar verbundene beziehungsweise gekoppelte weitere Produktionsmodul eine entsprechende Port-Information im Produktionsmodul gespeichert ist. Dabei kann die Port-Information gemäß der vorliegenden Beschreibung ausgebildet und eingerichtet sein.

Auf diese Weise liegt in einem Produktionsmodul dann für jedes unmittelbar damit gekoppelte Modul eine entsprechende Port-Information vor, über welche dann z.B. weiterhin sowohl die Funktionalität und Eigenschaften des benachbarten Moduls, als auch - wie vorstehend schon beispielhaft ausgeführt - auch weitere Informationen über über das benachbarte Produktionsmodul hinaus erreichbare Funktionalitäten verfügbar und erkennbar sind oder sein können.

Mit dieser Ausgestaltung wird beispielsweise die Planung und/oder Einrichtung eines in einem bestimmten Produktionsmodul befindlichen Produkts weiter vereinfacht, indem über die genannten Port-Informationen im Produktionsmodul bereits die Informationen verfügbar sind, welche Funktionalitäten und Einrichtungen über die nächsten Nachbarn des Produktionsmoduls sowie jeweils dahinter liegende Module verfügbar, erreichbar und/oder nutzbar sind oder sein können.

Das Produktionssystem kann weiterhin derart ausgebildet und eingerichtet sein, dass eine relative Anordnung der enthaltenen gekoppelten Produktionsmodule einer vorgegebenen oder vorgebbaren räumlichen und/oder flächigen Struktur entspricht. So kann beispielsweise zum Aufbau eines Produktionssystems eine gewissen Flächenelement-Form oder Raumelement-Form vorgegeben sein oder werden, welche ein Raster bilden, in welches sich die einzelnen Produktionsmodule des Produktionssystems einfügen müssen oder können. Module mit z.B. einer einheitlichen flächigen oder räumlichen Struktur, Form oder Ausgestaltung können dann z.B. in der Art eines zellularen Netzwerks geometrisch zueinander angeordnet werden und weiterhin dann elektrisch und/oder kommunikativ entsprechend gekoppelt sein oder werden.

Eine Vorgabe einer solchen räumlichen und/oder flächigen Struktur erleichtert den Aufbau und die Montage eines entsprechenden Produktionssystems, da bereits bei der Planung der einzelnen Module bekannt ist, wo Nachbarmodule räumlich an dieses Modul angrenzen und das Modul entsprechend ausgestaltbar und einrichtbar ist. Auf diese Weise kann sich ein Produktionssystem ggf. einfacher und mit reduziertem Justageaufwand aus entsprechenden Modulen aufbauen lassen. Flächige Strukturen können beispielsweise quadratische oder auch hexagonale Grundelemente oder ähnliche Formen aufweisen oder umfassen.

Zur Erreichung und/oder Einhaltung einer derartigen vorgegebenen oder vorgebbaren räumlichen und/oder flächigen Struktur können entsprechende Mittel vorgesehen oder eingerichtet sein.

Derartige Mittel können beispielsweise im Aufstell- oder Montagebereich des Produktionssystems beziehungsweise der Produktionsmodule vorgesehene Zellenbereich sein. Derartige Zellenbereiche können beispielsweise durch grafische, optische, elektronische oder ähnliche Mittel oder Maßnahmen markiert sein. Auf Grund solcher Markierungen kann dann die Anordnung oder Montage der Produktionsmodule zum Produktionssystem erleichtert, vereinfacht und/oder gesteuert werden.

Weiterhin können derartige Mittel zur Erreichung und/oder Einhaltung der vorgegebenen oder vorgebbaren Struktur als Verbindungselemente, Abstandssensoren, Marken oder ähnliche Mittel an den einzelnen Produktionsmodulen vorgesehen sein. Weiterhin können die Mittel auch Abstandshalter, Rahmenteile oder auch Montageplattformen mit entsprechenden Formen oder Ausgestaltungen für die einzelnen Produktionsmodule sein beziehungsweise derartige Mittel umfassen.

Entsprechende Verbindungselemente, z.B. zur mechanischen Kopplung oder Fixierung zweier oder mehrerer Produktionsmodule, können weiterhin auch zur elektrischen oder kommunikativen Verbindung der Module verwendet werden oder verwendbar sein. Weiterhin kann auch vorgesehen sein, dass eine elektrische und/oder kommunikative Verbindung zwischen den Produktionsmodulen über gesonderte Mittel erreicht wird.

Die vorstehend genannte Aufgabe wird auch gelöst von einem Verfahren zur Kopplung eines ersten Produktionsmoduls mit einem zweiten Produktionsmodul, wobei das erste Produktionsmodul zur Durchführung einer ersten Produktions-Funktion an einem Produkt und das zweite Produktionsmodul zur Durchführung einer zweiten Produktions-Funktion an dem Produkt ausgebildet und eingerichtet ist, und weiterhin im ersten Produktionsmodul eine erste Selbstbeschreibungs-Information bezüglich Eigenschaften des ersten Produktionsmoduls und im zweiten Produktionsmodul eine zweite Selbstbeschreibungs-Information bezüglich Eigenschaften des zweiten Produktionsmoduls gespeichert ist.
Das Verfahren umfasst dabei die Schritte:
- Koppeln des ersten und zweiten Produktionsmoduls,
- Übertragen der zweiten Selbstbeschreibungs-Information des zweiten Produktionsmoduls an das erste Produktionsmodul und
- Ermitteln einer ersten Port-Information bezüglich der Kopplung mit dem zweiten Produktionsmodul durch das erste Produktionsmodul und Speicherung der ersten Port-Information im ersten Produktionsmodul.

Durch die jeweils in den Produktionsmodulen vorhandene Selbstbeschreibungs-Information und das Ermitteln und Anlegen einer Portinformation bezüglich des mit dem ersten Produktionsmodul verbundenen zweiten Produktionsmodul lässt sich das Erstellen eines Produktionsablaufs unter Verwendung derartiger Produktionsmodule vereinfachen, da derartige Daten dann z.B. nicht mehr durch einen Bediener oder externe Maßnahmen einem Produktionsmodul zugeführt und eingerichtet werden müssen und das Produktionsmodul auf diese Weise eine gewisse Autarkie erhalten kann.

Dabei können das erste und zweite Produktionsmodul entsprechend einem Produktionsmodul der vorliegenden Beschreibung ausgebildet und eingerichtet sein. Weiterhin kann die erste und zweite Selbstbeschreibungs-Information, die Port-Information und auch die Kopplung der Produktionsmodule gemäß der vorliegenden Beschreibung ausgebildet und eingerichtet sein.

Insbesondere kann das Koppeln der Produktionsmodule sowohl im vorliegenden Zusammenhang, als auch allgemein für die in der vorliegenden Beschreibung offenbarten Module und Systeme, derart ausgebildet und eingerichtet sein, dass ein Zusammenwirken der ersten Produktionsfunktion des ersten Produktionsmoduls mit der zweiten Produktions-Funktion des zweiten Produktionsmoduls bezüglich des Produkts möglich ist oder erfolgt.

Dazu kann beispielsweise eine entsprechende räumliche beziehungsweise geometrische Anordnung der Produktionsmodule vorliegen und/oder auch eine entsprechende elektrische und/oder kommunikative Kopplung, um beispielsweise entsprechende Produktions-Funktionen koordinieren zu können. Zu der elektrischen und/oder kommunikativen Kopplung kann beispielsweise auch eine mechanische Kopplung der Produktionsmodule erfolgen, um deren relative Lage zueinander zu fixieren oder zumindest zu stabilisieren. Weiterhin können Verbindungselemente oder auch Strukturelemente bei den einzelnen Produktionsmodulen vorgesehen sein, welche das Ausbilden einer korrekten Ausrichtung beider Produktionsmodule zueinander ermöglichen oder vereinfachen beziehungsweise auch erzwingen können.

Das Ermitteln der ersten Port-Information kann beispielsweise aus einer Extraktion von entsprechenden Informationen, beispielsweise aus der übertragenen zweiten Selbstbeschreibungs-Information des zweiten Produktionsmoduls, bestehen oder eine solche umfassen. Weiterhin kann das Ermitteln der ersten Port-Information auch eine entsprechende Weiterverarbeitung erhaltener Informationen, gegebenenfalls in Kombination mit den eigenen Selbstbeschreibungs-Informationen oder auch weiteren Informationen, umfassen.

Die Übertragung der zweiten Selbstbeschreibungs-Information kann beispielsweise manuell ausgelöst werden oder auch selbsttätig beim Herstellen beziehungsweise nach dem Herstellen einer kommunikativen Kopplung. Weiterhin kann ein Übertragen der zweiten Selbstbeschreibungs-Information auch dann und/oder immer dann erfolgen, wenn sich entsprechende Eigenschaften, Konfigurationen und/oder Zustände des zweiten Produktionsmoduls geändert haben. Dabei können derartige sich verändernde oder veränderbare "Zustände" beispielsweise verschiedene Aktivitäts- und Verfügbarkeits-Zustände des Moduls, Fehler- oder Störungsmeldungen bzw. -zustände und/oder auch z.B. eine Anwesenheits- oder Lage-Änderung eines Produkts im Produktionsmodul sein.

Dazu kann beispielsweise weiterhin vorgesehen sein, dass das erste Produktionsmodul beim zweiten als entsprechendes verbundenes Modul angemeldet ist und bei jeder derartigen Änderung des zweiten Produktionsmoduls eine entsprechend aktualisierte Selbstbeschreibungs-Information bzw. Aktualisierung zu allen bei ihm angemeldeten Produktionsmodulen versendet wird.

Weiterhin kann vorgesehen sein, dass nach der Kopplung des ersten und zweiten Produktionsmoduls weiterhin
- die erste Selbstbeschreibungs-Information des ersten Produktionsmoduls und/oder die ersten Port-Information an das zweite Produktionsmodul übertragen wird und
- durch das zweite Produktionsmodul eine zweite Port-Information bezüglich der Kopplung zum ersten Produktionsmodul ermittelt und im zweiten Produktionsmodul gespeichert wird.

Auf diese Weise wird beispielsweise nach einer Kopplung der Produktionsmodule die jeweilige Information über die benachbarten Produktionsmodule und gegebenenfalls weiter damit verbundene oder gekoppelte Produktionsmodule, symmetrisch in beiden Produktionsmodulen gespeichert beziehungsweise vorgehalten. Auf diese Weise wird beispielsweise eine flexiblere Produktionsabfolge unter Verwendung der Produktionsmodule ermöglicht, da durch die Art der Verteilung der Information über die Module keine vorgegebenen Arbeitsfluss-Richtungen vorliegen, sondern von jedem Produktionsmodul aus die damit gekoppelten oder verbundenen Produktionsmodule sowohl mechanisch, wirkungsmäßig, als auch kommunikativ erreichbar sind.

Dabei können sich beispielsweise die erste und zweite Port-Information zumindest strukturell entsprechen.

Das vorliegend beschriebene Verfahren kann weiterhin derart ausgebildet und eingerichtet sein, dass die Ermittlung der ersten und/oder zweiten Portinformation die Ermittlung einer Information über einen räumlichen Wechselwirkungsbereich des ersten Produktionsmoduls mit dem zweiten Produktionsmodul umfasst. Dabei ist der Wechselwirkungsbereich dadurch gekennzeichnet, dass sowohl die erste Produktions-Funktion des ersten Produktionsmoduls, als auch die zweite Produktionsfunktion des zweiten Produktionsmoduls an dem Produkt wirken kann, wenn es sich im Wechselwirkungsbereich befindet.

Sowohl die Ermittlung des Wechselwirkungsbereichs als auch die Information über den räumlichen Wechselwirkungsbereich können gemäß der vorliegenden Beschreibung ausgebildet und eingerichtet sein. Die Ermittlung des räumlichen Wechselwirkungsbereichs kann beispielsweise im ersten Produktionsmodul, im zweiten Produktionsmodul oder auch in einer externen Rechner oder ähnlichen Einheit erfolgen. Weiterhin kann die Ermittlung des räumlichen Wechselwirkungsbereichs auch in mehreren der genannten Einheiten erfolgen und dann gegebenenfalls miteinander verglichen oder abgeglichen werden, um möglicherweise einen verbesserten Wechselwirkungsbereich zu erreichen.

Dabei kann jedes der Produktionsmodule die Information über den räumlichen Wechselwirkungsbereich, zumindest die Geometrie und Lage des Wechselwirkungsbereichs, jeweils in eigenen, Modul spezifischen Koordinatensystemen beschreiben. Alternativ kann beispielsweise auch ein gemeinsames Koordinatensystem vorgesehen sein, in welchem ein entsprechender Wechselwirkungsbereich einheitlich formulier- und/oder definierbar ist oder sein kann. Die Lage und/oder Geometrie des räumlichen Wechselwirkungsbereichs kann beispielsweise unter Verwendung von in den jeweiligen Selbstbeschreibungs-Informationen hinterlegten Informationen über verfügbare Arbeitsbereiche und Informationen über jeweilige relative räumliche Positionen oder Anordnungen der Module zueinander ermittelt werden.

Beispielsweise zur Verbesserung einer Zusammenwirkung gekoppelter oder zu koppelnder Produktionsmodule kann vorgesehen sein, dass nach der Ermittlung der Information über den räumlichen Wechselwirkungsbereich die relative Lage des ersten zum zweiten Produktionsmodul verändert wird und dann erneut eine Information bezüglich des räumlichen Wechselwirkungsbereichs gemäß der vorliegenden Beschreibung ermittelt wird. Auf diese Weise lässt sich quasi iterativ durch entsprechende Berechnung und Justage beispielsweise ein verbesserter, geeigneterer und/oder vergrößerter Wechselwirkungsbereich und damit ein verbessertes Zusammenwirken der Produktions-Funktionen der Produktionsmodule erreichen.

Das Koppeln des ersten mit dem zweiten Produktionsmodul kann beispielsweise auch derart erfolgen, dass die relative Anordnung gekoppelter Produktionsmodule einer vorgegebenen oder vorgebbaren räumlichen oder flächigen Struktur entspricht. Dabei kann die Kopplung, die Ausgestaltung der Produktionsmodule und/oder auch einer Montagefläche zur Erreichung einer vorgegebenen oder vorgebbaren räumlichen oder flächigen Struktur gemäß der vorliegenden Beschreibung ausgebildet und eingerichtet sein. Weiterhin können auch weitere Produktionsmodule mit dem ersten und/oder zweiten Produktionsmodul auf dieselbe Weise gekoppelt werden, so dass auf diese Weise auch ein aus einer größeren Anzahl von Produktionsmodulen bestehendes Produktionssystem aufbaubar ist.

Dabei können beispielsweise wiederum Mittel zur Erreichung und/oder Einhaltung der vorgegebenen oder vorgebbaren Struktur vorgesehen sein, wobei das Koppeln des ersten mit dem zweiten Produktionsmodul unter Verwendung dieser Mittel derart erfolgt, dass die relative Anordnung der gekoppelten Produktionsmodule der vorgegebenen oder vorgebbaren räumlichen und/oder flächigen Struktur entspricht.

Wie vorstehend bereits ausgeführt, können die Mitteln zur Erreichung der vorgegebenen Struktur, beispielsweise entsprechende Verbindungselemente, an jedem der Produktionsmodule umfassen. Diese können dabei derart ausgebildet und angeordnet sein, dass sich bei einer entsprechenden Verbindung der Produktionsmodule über die Verbindungselemente selbsttätig die vorgegebene oder vorgebbare räumliche oder flächige Struktur ergibt.

Weiterhin können zu diesem Zweck auch entsprechende Sensoren, beispielsweise Abstandssensoren und/oder entsprechende Marken dafür vorgesehen sein beziehungsweise die Mittel zur Erreichung der vorgegebenen Struktur können derartige Sensoren umfassen. Zudem können derartige Mittel auch Montageplattformen oder Gehäuse oder ähnliche Rahmenteile oder Strukturelemente mit einer entsprechenden Formgebung sein, welche beispielsweise durch Aneinanderfügen beziehungsweise in Kontakt bringen mit entsprechenden anderen Rahmen- oder Montageteilen anderer Produktionsmodule zum Aufbau der vorgegebenen oder vorgebbaren Struktur führen.

Zudem können auch im Aufbau beziehungsweise Montagebereich der gekoppelten Produktionsmodule entsprechende Flächen oder Raumbereiche für die einzelnen Produktionsmodule markiert sein, in welche die Produktionsmodule dann beispielsweise eingepasst oder einjustiert werden können oder müssen.

Weitere vorteilhafte Ausgestaltungen ergeben sich aus den Unteransprüchen.

Nachfolgend wird die vorliegende Erfindung mit Bezug auf die beiliegenden Zeichnungen beispielhaft näher erläutert.

Es zeigen:
Fig. 1: Beispiel für Aufbau, Daten- und Kommunikationsstruktur eines aus Produktionsmodulen aufgebauten Produktionssystems;
Fig. 2: Detaillierteres Beispiel für eine Datenstruktur eines Produktionsmoduls;
Fig. 3: Beispiel für eine Kombination eines Roboters mit einem Transportmodul;
Fig. 4: Schematische Struktur des in Fig. 3 dargestellten Beispiels eines Produktionssystems;
Fig. 5: Beispiel für den Verfahrensablauf bei der Kopplung zweier Produktionsmodule;
Fig. 6: Beispiele für flächige Anordnungsstrukturen von Produktions-Modulen zu einem Produktionssystem;
Fig. 7: Detailliertere schematische Darstellung des in Fig. 6 dargestellten Produktionssystems mit quadratischer Anordnung.

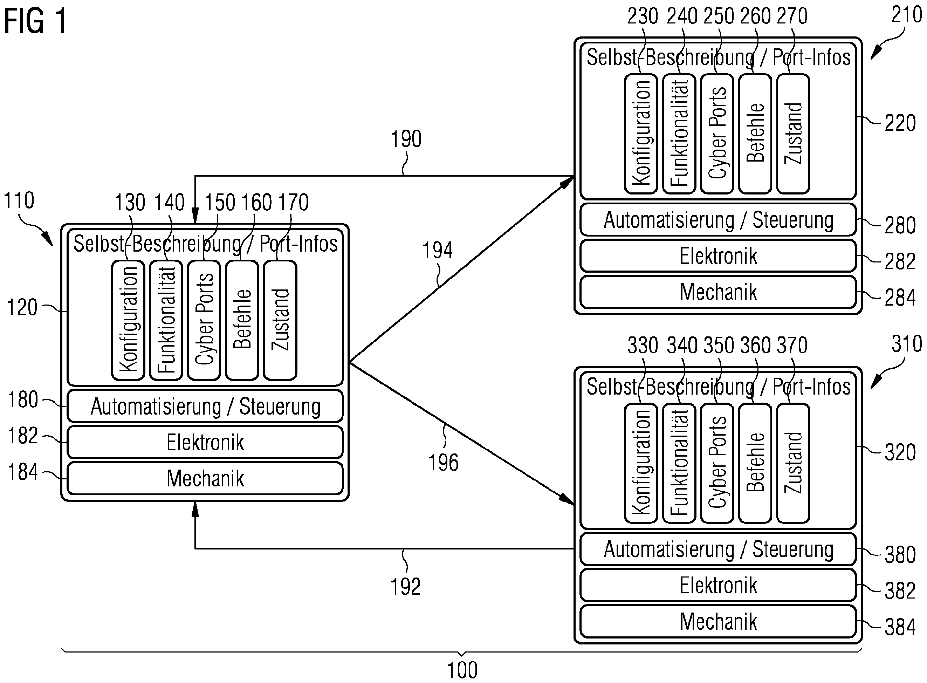

Fig. 1 zeigt einen schematischen Aufbau eines Produktionssystems 100 mit einem ersten Produktionsmodul 110, einem zweiten Produktionsmodul 210 sowie eine dritten Produktionsmodul 310, welche in Fig. 1 schematisch als Quadrate dargestellt sind.

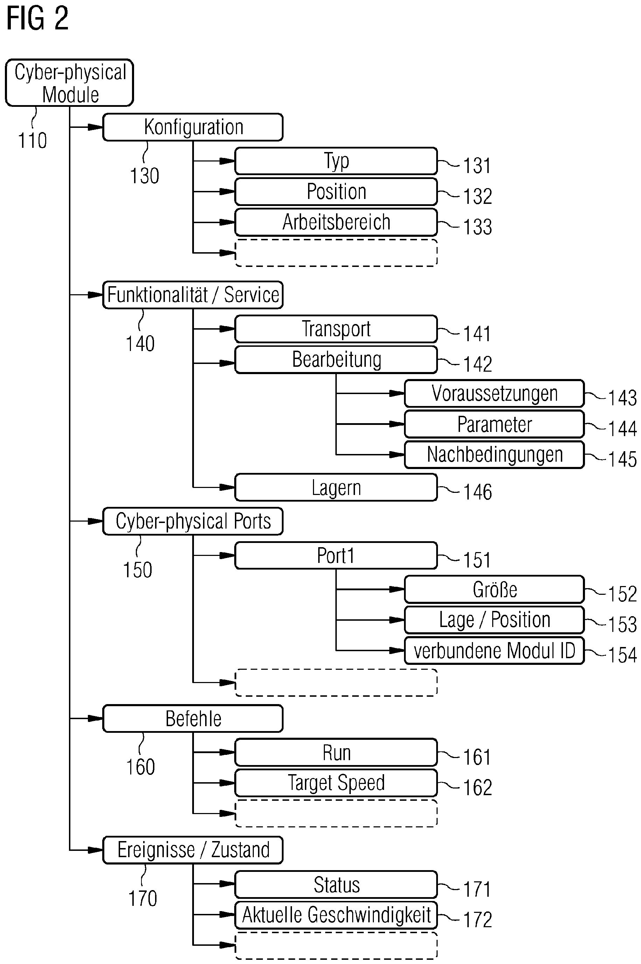

Für jedes der Module 110, 210, 310 ist schematisch ein Aufbau der Module dargestellt. Dabei umfassen die Module jeweils einen Speicherbereich 120, 220, 320, wobei in dem Speicherbereich 120, 220, 320 der jeweiligen Module 110, 210, 310 jeweils eine Port-Informationen 150, 250, 350 bezüglich im jeweiligen Modul vorliegenden, so genannten "Cyber-Physical-Ports", gespeichert ist. Die in Figur 1 dargestellten Port-Informationen 150, 250, 350 sind Beispiele für Port-Informationen gemäß der vorliegenden Beschreibung. Weiterhin umfasst der Speicherbereich 120, 220, 320 der jeweiligen Produktionsmodule jeweils eine Konfigurationsinformation 130, 230, 330 bezüglich einer funktionalen sowie elektronischen, mechanischen und kommunikativen Konfigurationen und sowie Eigenschaften des jeweiligen Moduls. Weiterhin umfasst der Speicherbereich 120, 220, 320 der jeweiligen Module eine Funktionalitäts-Beschreibung 140, 240, 340 des jeweiligen Moduls, eine Beschreibung verfügbarer Befehle 160, 260, 360, sowie eine oder mehrere Zustandsinformationen 170, 270, 370 bezüglich des jeweiligen Moduls 110, 210, 310. Die Konfigurationsinformationen 130, 230, 330, die Funktionalitäts-Beschreibungen 140, 240, 340, die Beschreibungen verfügbarer Befehle 160, 260, 360 und Zustandsinformationen 170, 270, 370 sind jeweils Beispiele für Selbstbeschreibungs-Informationen gemäß der vorliegenden Beschreibung. Die vorstehend genannten Selbstbeschreibungs- beziehungsweise Port-Informationen werden im Zusammenhang mit Fig. 2 noch beispielhaft weiter erläutert.

Weiterhin umfasst jede der Produktionsmodule 110, 210,310 eine Automatisierungs- und/oder Steuereinrichtung 180, 280, 380 zur Automatisierung oder Steuerung beziehungsweise der Handhabung der verschiedenen Funktionalitäten und Services, welches das jeweilige Produktionsmodul 110, 210, 310 zur Verfügung stellt. Weiterhin ist in jedem der Produktionsmodule 110, 210, 310 eine oder mehrere Elektronikbaugruppen oder - module 182, 282, 382 vorhanden, welche zum Betrieb beispielsweise von Aktoren sowie anderen elektronischen, optischen und sonstigen Einrichtungen des Moduls 110, 210, 310 erforderlich sind beziehungsweise verwendet wird. Zudem umfasst jedes der Module 110, 210, 310 mechanische Elemente 184, 284, 384.

Die in Fig. 1 dargestellten Pfeile 190, 192, 194, 196 stellen einen beispielhaften Kommunikationsablauf bei Änderungen im ersten Produktionsmodul 110 dar. Dazu registriert sich beispielsweise das zweite Produktionsmodul 210 über eine entsprechende Nachricht 190 beim ersten Produktionsmodul 110 als "Subscriber", das heißt, als mit dem ersten Produktionsmodul 110 verbundenes Modul. Dieses Registrieren kann beispielsweise bei der Kopplung beziehungsweise unmittelbar nach der Kopplung beider Module oder auch später erfolgen. In gleicher Weise registriert sich das dritte Produktionsmodul 310 über eine entsprechende "Subscriber"-Nachricht 192 beim ersten Produktionsmodul 110. Bei Änderungen im ersten Produktionsmodul, beispielsweise einer Zustandsänderung von einem NormalZustand zu einem Stopp-Zustand, welcher dann in den ZustandsInformationen 170 des ersten Produktionsmoduls 110 gespeichert wird, schickt dann das erste Produktionsmodul 110 eine entsprechende Änderungsnachricht 194 an das zweite Produktionsmodul 210 und auch eine entsprechende Nachricht 196 an das dritte Produktionsmodul 310. Auf diese Weise sind das zweite und dritte Produktionsmodul 210, 310 über die Zustandsänderung im ersten Produktionsmodul 110 informiert und können dies beispielsweise bei der Koordination einer Produktionskette oder einer gemeinsamen Bearbeitung oder Behandlung eines Produkts berücksichtigen.

Über ein derartiges Kommunikationsschema kann im Prinzip dafür gesorgt werden, dass bei Änderungen in einem der Produktionsmodule 110, 210, 310 jeweils die damit unmittelbar oder auch mittelbar verbundenen Produktionsmodule informiert sind und dies im Rahmen des Zusammenwirkens innerhalb des Produktionssystems 100 berücksichtigt werden kann. Ein entsprechender "Subscription"-Vorgang kann dann sinngemäß genauso vom ersten und dritten Produktionsmodul 110, 310 zum zweiten Produktionsmodul 210 beziehungsweise vom ersten und zweiten Produktionsmodul 110, 210 zum dritten Produktionsmodul eingerichtet sein, so dass sich über einen solchen Mechanismus alle drei der in Fig. 1 dargestellten Module 110, 210, 310 gegenseitig über Änderungen jeweils entsprechend informieren.

Die Produktionsmodule 110, 210, 310 können dabei beispielsweise als so genannte "Cyber-Physical-Modules" (CPM), oder auch als so genannte "Cyber-Physical-Production-Modules" (CPPM) bezeichnet werden beziehungsweise sind als derartige Module ausgebildet und ausgestaltet. Das Produktionssystem 100 kann in diesem Zusammenhang beispielsweise auch als ein so genanntes "Cyber-Physical-System" (CPS) bezeichnet werden, beziehungsweise ist derart ausgebildet und eingerichtet.

Fig. 2 zeigt das Beispiel für einen schematischen Aufbau der in Fig. 1 dargestellten Speichereinheit 120 des ersten Produktionsmoduls 110. Dieser Selbstbeschreibungs- beziehungsweise Port-Informations-Speicher 120 umfasst eine Konfigurationsinformation 130, in der beispielsweise ein Modultyp 131, eine geometrische Lage oder Anordnung 132 des Moduls oder von Funktionselementen des Moduls sowie ein Arbeitsbereich 133 des Moduls 110 gespeichert ist. Dabei kann der "Typ" 131 beispielsweise aus einer entsprechende Kennung oder auch einer oder mehreren Funktionsbezeichnungen bestehen beziehungsweise derartige Informationen umfassen. In der Information über den Arbeitsbereich 133 kann beispielsweise ein räumlicher Bereich beschrieben werden, in welchem Produkte im entsprechenden Produktionsmodul 110 vorhanden sein können beziehungsweise, innerhalb welchem diese Produkte bewegt werden können. So kann beispielsweise ein Arbeitsbereich eines Transportbandes ein entlang des Transportbandes sich längs erstreckender Volumenbereich sein, in welchem das Produkt mit Hilfe des Transportbandes bewegt werden kann. Bei einer Bearbeitungsmaschine kann der Arbeitsbereich beispielsweise der Volumenbereich sein, in welchem ein Bearbeitungselement der Maschine auf ein darin befindliches Produkt einwirken kann. Entsprechende Arbeitsbereiche lassen sich für weitere Funktionalitäten im Rahmender vorstehend beschriebenen Produktionsfunktionen ermitteln.

Weiterhin umfasst der Speicherbereich 120 des ersten Produktionsmoduls 110 eine Funktionalitäts- und Service-Information 140, wobei diese Information weitere Informationen zu Transportmöglichkeiten 141 mit dem Modul, BearbeitungsMöglichkeiten 142 des Moduls oder auch Lager-möglichkeiten 146 zur Ablage oder Speicherung von Produkten oder Materialien umfasst. Die Bearbeitungsinformationen 142 können beispielsweise weiterhin Informationen zu Voraussetzungen zur Verwendung der entsprechenden Bearbeitungsfunktionen 143, entsprechende Parameter, welche die Bearbeitungsfunktionen näher kennzeichnen 144 und/oder auch Nachbedingungen 145 umfassen, welche für eine Weiterbehandlung des Produkts nach der Bearbeitung charakterisierend beziehungsweise notwendig sind.

Ganz allgemein kann ein Produktionsmodul gemäß der vorliegenden Beschreibung jeweils auch mehrere der genannten Produktions-Funktionalitäten umfassen, wobei dann beispielsweise in einer entsprechenden Speichereinrichtung für jede der Funktionalitäten eine Information abgelegt werden kann beziehungsweise abgelegt ist. So kann beispielsweise ein Produktionsmodul mehrere Transportfunktionalitäten, beispielsweise über ein oder mehrere Transportbänder oder Roboterarme beziehungsweise eine Kombination davon aufweisen, verschiedene Bearbeitungsfunktionen aufweisen, sowie auch verschiedene Lagerungsmöglichkeiten aufweisen.

In der Speichereinrichtung 120 des Produktionsmoduls 110 ist weiterhin eine Port-Information 150 über einen so genannten "Cyber-Physical-Port" zu einem weiteren Produktionsmodul gespeichert. Dieser "Cyber-Physical-Port" kann sowohl Informationen über eine funktionale Zusammenarbeit von gekoppelten Produktionsmodulen, als auch Informationen über in den derart gekoppelten Modulen verfügbare Funktionalitäten umfassen.

So enthält die Port-Information 150 beispielsweise Informationen über einen ersten "Cyber-Physical-Port" 151 zu einem benachbarten, gekoppelten Produktionsmodul, beispielsweise dem zweiten Produktionsmodul 210 gemäß Fig. 1. Dabei ist in der entsprechenden Portinformation 151 beispielsweise eine Information über eine Größe des Wechselwirkungs- oder Übergabebereichs 152 zum zweiten Produktionsmodul, eine Lage oder Position des Übergabebereichs 153, sowie einer Kennung 154 des verbundenen Moduls 210, enthalten. Weiterhin kann beispielsweise eine Information über eine Funktionalität des zweiten Produktionsmoduls sowie Informationen über Funktionalitäten von weiteren, mit dem zweiten Produktionsmodul 210 verbundenen Produktionsmodulen in der entsprechenden Portinformation 151 gespeichert sein. Würde vom ersten Produktionsmodul 110 eine weitere unmittelbare Verbindung zu einem weiteren Produktionsmodul existieren, beispielsweise dem dritten Produktionsmodul 310 gemäß Fig. 1, so würde auch für diesen entsprechenden "Cyber-Physical-Port" zum dritten Produktionsmodul 310 eine entsprechende Port-Information in der allgemeinen Port-Information 150 abgelegt.

Weiterhin enthält der Speicherbereich 120 des ersten Produktionsmoduls 110 eine Information 160 über im Produktionsmodul verwendbare Befehle oder Kommandos zu dessen Steuerung. So ist in diesem Befehls-Speicher 160 beispielsweise Information zu einem Run-Befehl 161 oder auch zu einem Target-Speed-Befehl 162 niedergelegt, mit welchen diese Befehle mit entsprechenden verwendbaren Parametern definiert sind und von einem Benutzer des Systems zum Einrichten einer Steuerung für das Produktionsmodul 110 ausgelesen werden können.

Im Ereignis-/Zustandsinformations-Bereich 170 in der Speichereinrichtung 120 des ersten Produktionsmoduls 110 sind beispielsweise Informationen über den aktuellen Status des Produktionsmoduls 171 sowie beispielsweise über die aktuelle Geschwindigkeit eines Motors des Moduls 172 abgelegt.

Die Gesamtheit der im ersten Produktionsmodul 110 abgelegten Informationen gemäß Fig. 2 ermöglicht es, auch mit relativ geringer Einwirkung eines Benutzers, oder auch ohne Einwirkung eines Benutzers, eine Zusammenarbeit mehrerer derartiger Produktionsmodule zu organisieren und einen gemeinsamen Produktionsablauf solcher gekoppelter Produktionsmodule zu erwirken. Über die genannten Informationen ist es einem an ein solches Produktionsmodul gekoppeltes weiteres Modul möglich, sowohl Informationen über Funktionalitäten über die Geometrie, als auch über den Zustand und die Ansteuer- beziehungsweise Steuermöglichkeiten eines Moduls sowie die Kopplungsmöglichkeiten an das Modul zu erkennen und dies beispielsweise bei einem halbautomatisierten oder auch automatisierten Planungsprozess zu berücksichtigen.

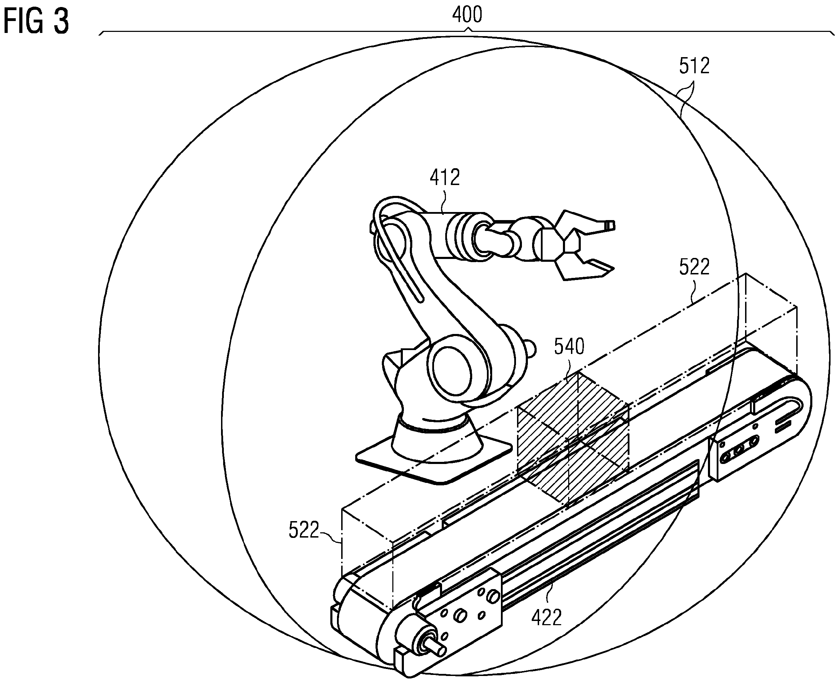

Fig. 3 stellt einen kleinen Ausschnitt aus einem größeren Produktionssystem 400 dar, wobei dieser Ausschnitt einen Roboter 412 sowie ein Transport- oder Förderband 422 umfasst. Dabei ist in Fig. 3 zum Transport- oder Förderband 422 ein Arbeitsbereich 522 dargestellt, innerhalb dessen Volumenbereich ein Produkt transportierbar ist. Die Information über den Arbeitsbereich 522 kann beispielsweise innerhalb einer entsprechenden Konfigurations-Information in einem Speicher des Transportbands 422 abgelegt sein. Weiterhin ist ein Arbeitsbereich 512 des Roboterarms 412 durch kreisförmige Linien aufgespannt, welche einen kugelförmigen Arbeitsbereich für den Roboterarm 412 kennzeichnen. In Fig. 3 ist auch ein Wechselwirkungsbereich 540 zwischen den Transportband 422 und dem Roboterarm 412 dargestellt, innerhalb wessen sich ein Produkt befinden muss, damit es vom Roboterarm 412 an das Transportband 422 übergeben werden kann oder vom Roboterarm 412 vom Transportband 422 abgenommen werden kann.

Die Information über diesen Wechselwirkungsbereich kann dann beispielsweise in einer Speichereinrichtung des Transportbands 422 und/oder in einem Speicherbereich des Roboterarms 412 abgelegt sein. Die Ermittlung des Wechselwirkungsbereichs 540 kann beispielsweise bei der Kopplung des Roboterarms 412 mit dem Transportband 422 erfolgen. Wird die geometrische Lage zwischen Roboterarm 412 und dem Transportband 422 geändert, so kann auch ein geänderter Wechselwirkungsbereich 540 ermittelt werden. Die Ermittlung des Wechselwirkungsbereichs kann beispielsweise wie in der vorliegenden Beschreibung näher erläutert vorgenommen werden.

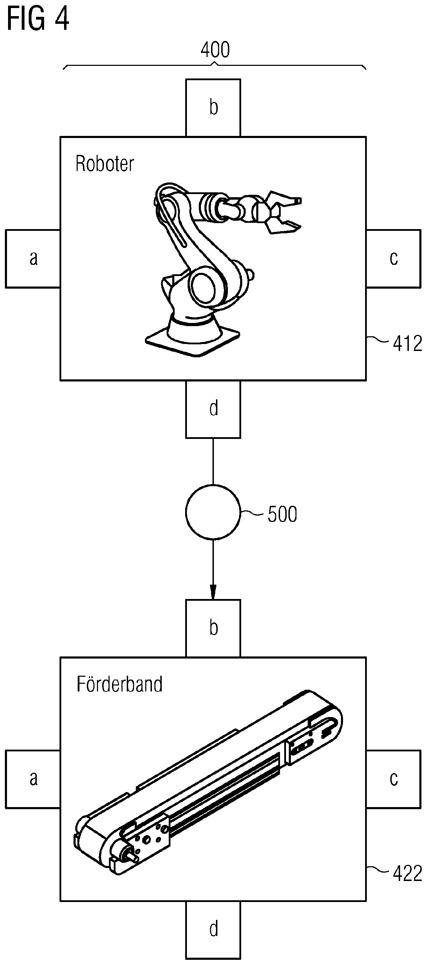

Die Kopplung des Transportbands 422 an den Roboterarm über den Wechselwirkungsbereich 450 ist beispielsweise als ein "Cyber-Physical-Port" des Transportbands 422 zum Roboterarm 412 beschreibbar. Genauso ist aus Sicht des Roboterarms 412 die Kopplung zum Transportband 422 über den Wechselwirkungsbereich 540 als entsprechender "Cyber-Physical-Port" beschreibbar. Dies ist in Fig. 4 in schematisierter Weise dargestellt.

Fig. 4 zeigt eine schematische Darstellung des Roboterarms 412 sowie eine schematische Darstellung des Transport- oder Förderbandes 422. Dabei ist der "Cyber-Physical-Port" 412/d aus der Sicht des Roboters 412 zum Transportband 422 als Quadrat mit Bezeichnung "d" in Fig. 4 gekennzeichnet. Genauso ist der "Cyber-Physical-Port" 422/b aus Sicht des Transportbands 422 zum Roboter 412 als Quadrat mit "b" an der schematischen Darstellung des Förderbandes 422 dargestellt. Weiterhin sind in Fig. 4 weitere potentielle "Cyber-Physical-Ports" des Roboterarms 412, 412/a, 412/b, 412/c dargestellt, welche entsprechende "Cyber-Physical-Ports" 412/a, 412/b, 412/c zu in Fig. 4 nicht dargestellten benachbarten Modulen darstellen, beziehungsweise entsprechende Speichereinrichtungen für entsprechende Portinformationen symbolisieren. In gleicher Weise sind auch für das Förderband 422 weitere "Cyber-Physical-Ports" 422/a, 422/c, 422/d dargestellt, welche potentielle "Cyber-Physical-Ports" zu weiteren, nicht in Fig. 4 dargestellten Produktionsmodulen, oder auch Speicherbereiche für entsprechende Portinformationen symbolisieren.

Weiterhin ist in Fig. 4 ein vom Roboter 412 an das Transportband 422 zu übergebendes Produkt 500 dargestellt. In der schematischen Darstellung von Fig. 4 ist dies derart dargestellt, dass das Produkt 500 quasi in den "Cyber-Physical-Port" 412/d des Roboters 412 zum Förderband 422 durch den Roboter verbracht wird und dann im "Cyber-Physical-Port" 422/b des Förderbands zum Roboter 412 übernommen um dann z.B. vom Förderband 422 weiter transportiert zu werden.

Dabei beschreiben beide Portinformationen 412/d und 422/d zumindest unter anderem denselben räumlichen Wechselwirkungsbereich, um eine entsprechende Produkt-Übergabe realisieren zu können.

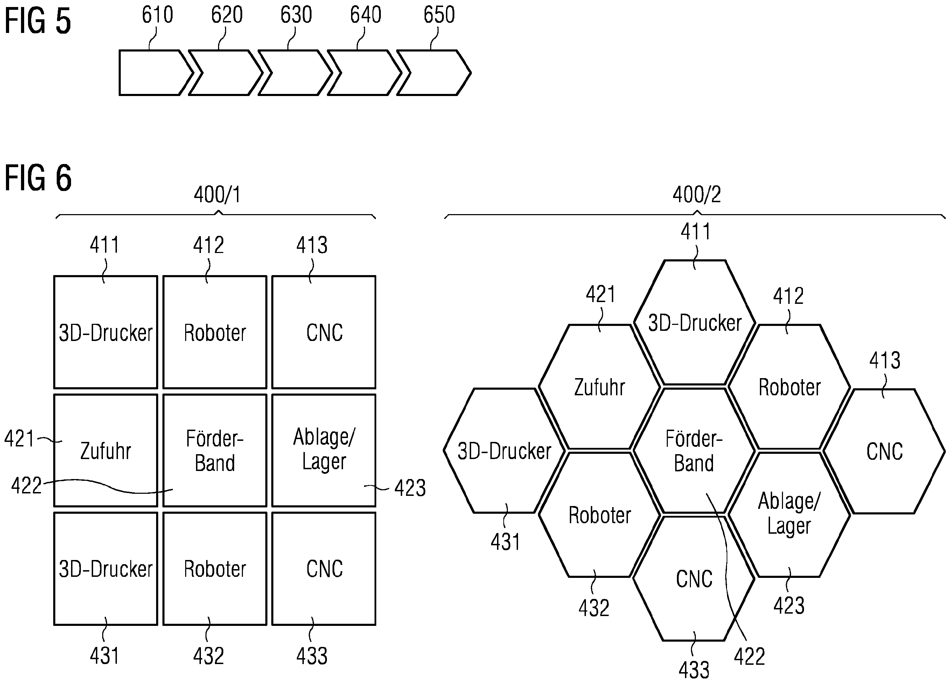

Fig. 5 zeigt ein Beispiel für einen schematischen Ablauf bei der Kopplung zweier Produktionsmodule, die beispielsweise gemäß der vorliegenden Beschreibung oder insbesondere entsprechend den in Fig. 1 bis 4 dargestellten Produktionsmodule ausgebildet und eingerichtet sein können.

In einem ersten Schritt 610 wird ein neues Produktionsmodul zu einem bereits installierten Produktionsmodul assoziiert. Diese Assoziierung 610 kann beispielsweise über einen manuellen Benutzereingriff, z.B. über einen entsprechenden Touchscreen der Module oder eine entsprechende Netzwerkverbindung, ausgelöst werden, oder auch durch entsprechende Abstands- oder ähnlichen Sensoren, welche das neue Modul als benachbart zum installierten Modul erkennen. Die assoziierten Module werden somit Nachbarn und melden sich über entsprechende Kommunikationsmittel als solche beim jeweils anderen Modul an. Durch diese gegenseitige Anmeldung kann zumindest unter Anderem bewirkt werden, dass entsprechende Änderungen bei jedem der Module dem jeweils andren Modul mitgeteilt werden. Dies kann beispielsweise über einen Subscription-Kommunikations-Modus, wie er im Zusammenhang mit Fig. 1 erläutert wurde, erreicht werden.

In einem Ausrichtungsschritt 620 wird dann eine topologische Ausrichtung der Positionen und Arbeitsbereiche der Module erreicht oder eingerichtet. Dies kann beispielsweise unter Verwendung eines Koordinatensystems des bereits installierten Moduls geschehen. Abhängig von der verfügbaren Technologie kann dies vollautomatisiert geschehen (z.B. mit Hilfe eines entsprechenden Positionierungssystems und so genannter "Near Field Communication" oder auch RFID-Technologie). Weiterhin können die Module beispielsweise auch einen Bediener, z.B. über ein entsprechendes Bedien-Pannel, dazu anleiten, wie z.B. das neue Modul am bewegt oder ausgerichtet werden muss.

Eine derartige Ausrichtung lässt sich einfacher erreichen, wenn für das gesamte Produktionssystem eine entsprechende Gitter- oder Wabenstruktur festgelegt wird, wie dies im Zusammenhang mit Fig. 6 näher erläutert wird.

In einem Berechnungsschritt 630 erfolgt eine automatische Berechnung der "Cyber-Physical-Ports", welcher unter anderem die Berechnung eines Schnittvolumens zwischen den Arbeitsbereichen beider Module umfasst. Ein solches Schnitt-Volumen ist ein Beispiel für einen Wechselwirkungs-Bereichs gemäß der vorliegenden Beschreibung. Die Informationen über die jeweiligen Arbeitsbereiche der einzelnen Module sind in den jeweiligen Modulen abgelegt und werden durch diese auch an andere Module übermittelt. Auf diese Weise kann das bereits installierte Modul vom neuen Modul dessen Arbeitsbereich erfahren und über die Kenntnis des eigenen Arbeitsbereichs und eine relative Positionierung dann das Schnittvolumen berechnen. Ergibt die Berechnung, dass sich beide Arbeitsbereiche nicht überlappen, so können die entsprechenden Module im Regelfall nicht einfach funktional gekoppelt werden.

In einem vierten Informations-Austausch-Schritt 640 erfolgt ein Austausch der entsprechenden Serviceinformationen bezüglich der Eigenschaften der jeweiligen Produktionsmodule an das andere Produktionsmodul. Über den in Zusammenhang mit Fig. 1 bereits erläuterten Anmelde- und Veröffentlichungsmechanismus kann beispielsweise das bereits installiert Modul die Informationen bezüglich der Eigenschaften des neuen Moduls übertragen bekommen, diese bei sich abspeichern und gegebenenfalls an weitere, mit dem bereits installierten Modul bereits verbundene Module weitergeben. Die Information über die Funktionalität beziehungsweise die Eigenschaften oder Kennung des neuen Produktionsmoduls kann dann beispielsweise in der Port-Information des installierten Moduls bezüglich des neuen Moduls abgelegt werden.

In einem Abstimmungsschritt 650 erfolgt dann eine Abstimmung der Funktionalität des bereits installierten Moduls mit dem neu installierten Modul, um ein Zusammenwirken der Funktionalitäten beider Module zu ermöglichen. Eine solche Abstimmung kann beispielsweise die Anpassung von Transportgeschwindigkeiten zweier miteinander verbundener Transportbänder oder auch die Anpassung einer Transportgeschwindigkeit an einen durchzuführenden Bearbeitungsprozess oder Ähnliches beinhalten. Nach Abschluss des Zusammenarbeitsschritts 650 können das neuen Produktionsmodul und das bereits installierte Produktionsmodul in Bezug auf eine Bearbeitung und Produktion eines Produkts zusammenwirken.

Fig. 6 stellt zwei Beispiele für räumliche regelmäßige Anordnungen des Produktionssystems 400 dar, wobei in Fig. 6 nun das vollständige Produktionssystem 400 dargestellt ist. In einer ersten quadratischen Rasterstruktur des Produktionssystems 400/1 befindet sich jedes der Produktionsmodule innerhalb eines quadratischen Flächenbereichs. Das Produktionssystem 400 umfasst dabei zwei 3D-Drucker 411, 431, zwei Roboter 412, 432 sowie zwei CNC-Maschinen 413, 433 (CNC: Computerized Numerical Control). Weiterhin umfasst das Produktionssystem eine Zufuhr und Transporteinheit 421 für das Produkt, ein Transport- oder Förderband für das Produkt 422 sowie eine Transport- und Lagereinheit 423.

Durch die räumliche Ausgestaltung der jeweiligen Modulumrisse können die einzelnen Produktionsmodule so ausgebildet werden, dass sie sich vollständig innerhalb des entsprechenden quadratischen Flächenbereichs befinden und auch die Abstände zu den Rändern der jeweiligen quadratischen Zellen bekannt sind. Somit können bereits bei der Entwicklung der einzelnen Module entsprechende mechanische Elemente zum Transport oder zur Bearbeitung der Produkte so ausgestaltet sein, dass eine Zusammenwirkung mit einer benachbarten quadratischen Zelle möglich ist. Die Herstellung eines entsprechend mit quadratischer Struktur ausgebildeten Produktionssystems 400/1 kann beispielsweise durch entsprechende Gehäuseformen oder auch Trägerplattformen für die einzelnen Produktionsmodule erleichtert werden.

Fig. 6 zeigt weiterhin eine alternative Ausgestaltung des Produktionssystems als hexagonales Waben-System 400/2, bei welchem die Produktionsmodule des Produktionssystems 400 in jeweiliger hexagonaler Zellenanordnung ausgebildet und zu einem Produktionssystem zusammengefügt sind.

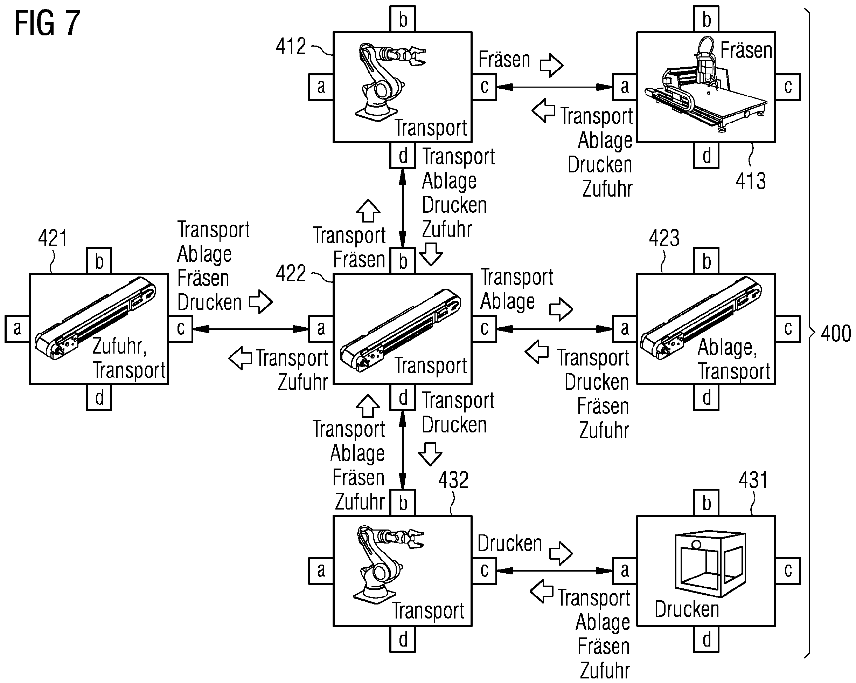

Fig. 7 stellt das in Fig. 6 dargestellte Produktionssystem 400 in einem Ausschnitt und einer funktionaleren Darstellung dar. In Fig. 7 ist das Produktionssystem 400 im Gegensatz zu Fig. 6 mit nur einem 3D-Drucker 431 sowie nur einer CNC-Fräse 413 dargestellt.

Die Darstellung der einzelnen Produktionsmodule in Fig. 7 erfolgt symbolisch, wobei zu jedem der Produktionsmodule vier "Cyber-Physical-Ports" a, b, c, d als angehängte, kleine Quadrate dargestellt sind, welche einen möglichen oder auch existierenden "Cyber-Physical-Port" symbolisieren.

So hat beispielsweise das Transport- oder Förderband 422 vier existierende "Cyber-Physical-Ports" 422/a, 422/b, 422/c, 422/d. Dabei symbolisiert der "Cyber-Physical-Port" 422/a zum Zufuhr-Transport-Modul 421 den "Cyber-Physical-Port" zu diesem Modul. Die in Bezug auf diesen "Cyber-Physical-Port" 422/a gespeicherten Informationen umfassen auch sämtliche Funktionalitäten, welche über diesen "Cyber-Physical-Port" erreichbar sind. Diese erreichbaren Funktionalitäten sind in Fig. 7 als Text neben das jeweiligen quadratische Symbol des "Cyber-Physical-Ports" geschrieben. So enthält der "Cyber-Physical-Port" 422/a unter Anderem die Information, dass über diesen Port, das heißt diese Verbindung, zum Zufuhr/Transport-Modul, die Funktionalitäten: "Transport" und "Zufuhr" erreichbar sind, welche vom entsprechenden Modul 421 ausgeführt werden können. Über den Port 422/b des Transport-moduls 422 zum Roboter 412 sind beispielsweise die Funktionalitäten "Transport" und "Fräsen" verfügbar, welche dann in der entsprechenden Portinformation 422/b abgelegt sind. Dabei wird die Funktionalität "Transport" vom Roboter 412 durchgeführt, während die Funktionalität "Fräsen" von der mit dem Roboter 412 verbundenen CNC-Fräse 413 durchgeführt wird.

Über den Port 421/c des Zufuhr-, Transport-Moduls 421 sind auf diese Weise beispielsweise alle Funktionalitäten (außer der eigenen) des Produktionssystems 400, wie es in Fig. 7 dargestellt ist, verfügbar - also über die verschiedensten Wege die Funktionalitäten "Transport", "Ablage", "Fräsen" sowie "Drucken".
Auf diese Weise kann bei einem, in einem bestimmten Modul befindlichen Produkt, und bekannten nächsten erforderlichen Arbeitsschritten jeweils durch Analyse der Portinformationen des jeweiligen Moduls bei Bedarf ein Produktionsablauf zur weiteren Produktion des Produkts bestimmt werden.
Die Organisation der einzelnen in den Ports abgelegten Funktionsinformationen über die verbundenen Module, kann beispielsweise über einen Informations-Verteilungsschritt, wie er beispielsweise in Fig. 5 in Zusammenhang mit dem Schritt 640 erläutert wurde, erreicht werden. Über einen, wie beispielsweise in Zusammenhang mit Fig. 1 erläuterten Änderungs-Weitergabe-Mechanismus können die jeweiligen Informationen dann aktuell gehalten werden.
Die Erfindung wird durch die unabhängigen Ansprüche definiert

## Patentansprüche

1. Produktionsmodul (110, 210, 310, 411, 412, 413, 421, 422, 423, 431, 432, 433) zur Durchführung einer Produktions-Funktion an einem Produkt (500),
wobei
das Produktionsmodul zur Kopplung mit einem zweiten Produktionsmodul (110, 210, 310, 411, 412, 413, 421, 422, 423, 431, 432, 433) ausgebildet und eingerichtet ist oder mit einem zweiten Produktionsmodul (110, 210, 310, 412, 413, 421, 422, 423, 431, 432, 610, 710) gekoppelt ist, wobei das zweite Produktionsmodul zur Durchführung einer zweiten Produktions-Funktion an dem Produkt (500) ausgebildet und eingerichtet ist,
wobei in einer Speichereinrichtung (120, 220, 320) des Produktionsmoduls eine Selbstbeschreibungs-Information (130, 140, 160, 170, 230, 240, 260, 270, 330, 340, 360, 370) bezüglich Eigenschaften des Produktionsmoduls gespeichert ist,
dass das zweite Produktionsmodul eine zweite Selbstbeschreibungs-Information (130, 140, 160, 170, 230, 240, 260, 270, 330, 340, 360, 370) bezüglich Eigenschaften des zweiten Produktionsmoduls umfasst, und
wobei das Produktionsmodul zum Übertragen der Selbstbeschreibungs-Information an das zweite Produktionsmodul und zum Empfang zweiten Selbstbeschreibungs-Information vom zweiten Produktionsmodul ausgebildet und eingerichtet ist, **dadurch gekennzeichnet,**
**dass** in der Speichereinrichtung des Produktionsmoduls eine Port-Information (150, 151, 152, 153, 154, 250, 350) bezüglich der Kopplung mit dem zweiten Produktionsmodul gespeichert ist oder das Produktionsmodul zur Speicherung einer Port-Information bezüglich der Kopplung mit dem zweiten Produktionsmodul ausgebildet und eingerichtet ist, und
**dass** die Port-Information (150, 151, 152, 153, 154, 250, 350) bezüglich der Kopplung mit dem zweiten Produktionsmodul eine Information über einen räumlichen Wechselwirkungsbereich (540) des Produktionsmoduls mit dem zweiten Produktionsmodul umfasst, wobei der Wechselwirkungsbereich (540) derart ausgestaltet ist, dass sowohl die Produktions-Funktion des Produktionsmoduls als auch die zweite Produktions-Funktion des zweiten ProduktionsModuls an dem Produkt wirken kann, wenn es sich im Wechselwirkungsbereich (540) befindet.

2. Produktionsmodul gemäß Anspruch 1,
**dadurch gekennzeichnet,**
**dass** die Port-Information (150, 151, 152, 153, 154, 250, 350) eine Information über eine Geometrie des Wechselwirkungsbereichs (540) und/oder eine Position des Wechselwirkungsbereichs (540) umfasst.

3. Produktionsmodul gemäß Anspruch 1 oder 2,
**dadurch gekennzeichnet,**
**dass** das Produktionsmodul zur Ermittlung des räumlichen Wechselwirkungsbereichs (540) des Produktionsmoduls mit dem zweiten Produktionsmodul (110, 210, 310, 411, 412, 413, 421, 422, 423, 431, 432, 433) ausgebildet und eingerichtet ist.

4. Produktionsmodul gemäß einem der Ansprüche 1 bis 3,
**dadurch gekennzeichnet,**
**dass** die Information über den räumlichen Wechselwirkungsbereich (540) des Produktionsmoduls mit dem zweiten Produktionsmodul eine Information über eine Geometrie des Wechselwirkungsbereichs und/oder eine Position des Wechselwirkungsbereichs umfasst.

5. Produktionsmodul gemäß einem der Ansprüche 1 bis 4,
**dadurch gekennzeichnet,**
**dass** die Port-Information (150, 151, 152, 153, 154, 250, 350) bezüglich der Kopplung mit dem zweiten Produktionsmodul Informationen bezüglich Eigenschaften des zweiten Produktionsmoduls, insbesondere bezüglich der zweite Produktionsfunktion des zweiten Produktionsmoduls, umfasst.

6. Produktionsmodul gemäß einem der Ansprüche 1 bis 5,
**dadurch gekennzeichnet,**
**dass** die Port-Information (150, 151, 152, 153, 154, 250, 350) bezüglich der Kopplung mit dem zweiten Produktionsmodul Informationen bezüglich Eigenschaften von mit dem zweiten Produktionsmodul unmittelbar und/oder mittelbar verbundenen weiteren Produktionsmodulen (110, 210, 310, 411, 412, 413, 421, 422, 423, 431, 432, 433) umfasst, insbesondere bezüglich Produktionsfunktionen von mit dem zweiten Produktionsmodul unmittelbar und/oder mittelbar verbundenen Produktionsmodulen (110, 210, 310, 411, 412, 413, 421, 422, 423, 431, 432, 433) umfasst.

7. Produktionsmodul gemäß einem der Ansprüche 1 bis 6,
**dadurch gekennzeichnet,**
**dass** die Selbstbeschreibungs-Information (130, 140, 160, 170, 230, 240, 260, 270, 330, 340, 360, 370) weiterhin umfasst:
- eine Konfigurations-Information (130, 131, 132, 133, 230, 330) bezüglich einer Lage und/oder Ausgestaltung des Produktionsmoduls,
- eine Fähigkeits-Information (140, 141, 142, 143, 144, 145, 146, 240, 340) bezüglich verfügbarer Funktionen und Services des Produktionsmoduls, welche eine Information über die Produktions-Funktion umfasst,
- eine Befehls-Information (160, 161, 162, 260, 360) bezüglich vom Produktionsmodul ausführbarer Befehle und einstellbarer Parameter, und/oder
- eine Zustands-Information (170, 171, 172, 270, 370) bezüglich eines Arbeitszustands des Produktionsmoduls.

8. Produktionsmodul gemäß einem der vorstehenden Ansprüche,
**dadurch gekennzeichnet,**
**dass** die im Produktionsmodul gespeicherte Port-Information bezüglich der Kopplung mit dem zweiten Produktionsmodul Informationen bezüglich Eigenschaften eines mit dem zweiten Produktionsmodul gekoppelten dritten Produktionsmoduls (110, 210, 310, 411, 412, 413, 421, 422, 423, 431, 432, 433), insbesondere bezüglich einer dritten Produktions-Funktion des dritten Produktionsmoduls, umfasst,
wobei das dritte Produktionsmodul mit dem zweiten Produktionsmodul gekoppelt ist, im dritten Produktionsmodul eine dritte Selbstbeschreibungs-Information (130, 140, 160, 170, 230, 240, 260, 270, 330, 340, 360, 370) bezüglich Eigenschaften des dritten Produktionsmoduls gespeichert oder speicherbar ist, und das dritte Produktionsmodul zur Durchführung der dritten Produktions-Funktion an dem Produkt ausgebildet und eingerichtet ist.

9. Produktionssystem (100, 400) zur Herstellung eines Zwischen- oder Endprodukts, umfassend eine Mehrzahl von gemäß einem der vorstehenden Ansprüche zumindest teilweise untereinander gekoppelten Produktionsmodulen (110, 210, 310, 411, 412, 413, 421, 422, 423, 431, 432, 433), wobei jedes der Mehrzahl von Produktionsmodulen gemäß einem der vorstehenden Ansprüche ausgebildet und eingerichtet ist.

10. Produktionssystem gemäß Anspruch 9,
**dadurch gekennzeichnet,**
**dass** in jedem der Produktionsmodule eine Port-Information (150, 151, 152, 153, 154, 250, 350) gemäß einem der Ansprüche 1 bis 8 für jedes unmittelbar mit diesem Produktionsmodul gekoppelte Produktionsmodul aus der Mehrzahl der Produktionsmodule gespeichert ist.

11. Produktionssystem gemäß Anspruch 9 oder 10,
**dadurch gekennzeichnet,**
**dass** eine relative Anordnung der Mehrzahl von gekoppelten Produktionsmodulen einer vorgegebenen oder vorgebbaren räumlichen und/oder flächigen Struktur entspricht.

12. Produktionssystem gemäß Anspruch 11,
**dadurch gekennzeichnet,**
**dass** Mittel zur Erreichung oder Einhaltung der vorgegebenen oder vorgebbaren Struktur vorgesehen sind.

13. Verfahren zur Kopplung eines ersten Produktionsmoduls (110, 210, 310, 411, 412, 413, 421, 422, 423, 431, 432, 433) mit einem zweiten Produktionsmodul (110, 210, 310, 411, 412, 413, 421, 422, 423, 431, 432, 433),
wobei das erste Produktionsmodul zur Durführung einer ersten Produktions-Funktion an einem Produkt (500) und das zweite Produktionsmodul zur Durchführung einer zweiten Produktions-Funktion an dem Produkt (500) ausgebildet und eingerichtet ist, und weiterhin
im ersten Produktionsmodul eine erste Selbstbeschreibungs-Information (130, 140, 160, 170, 230, 240, 260, 270, 330, 340, 360, 370) bezüglich Eigenschaften des ersten Produktionsmoduls und im zweiten Produktionsmodul eine zweite Selbstbeschreibungs-Information (130, 140, 160, 170, 230, 240, 260, 270, 330, 340, 360, 370) bezüglich Eigenschaften des zweiten Produktionsmoduls gespeichert ist, **gekennzeichnet durch** die Schritte:
- Koppeln des ersten und zweiten Produktionsmoduls,
- Übertragen der zweiten Selbstbeschreibungs-Information des zweiten Produktionsmoduls an das erste Produktionsmodul, und
- Ermitteln einer ersten Port-Information (150, 151, 152, 153, 154, 250, 350) bezüglich der Kopplung mit dem zweiten Produktionsmodul **durch** das erste Produktionsmodul und Speicherung der ersten Port-Information im ersten Produktionsmodul,
wobei die Ermittlung der ersten Port-Information die Ermittlung einer Information über einen räumlichen Wechselwirkungsbereich (540) des ersten Produktionsmoduls mit dem zweiten Produktionsmodul umfasst, wobei der Wechselwirkungsbereich derart ausgestaltet ist, dass sowohl die erste Produktions-Funktion des ersten Produktionsmoduls als auch die zweite Produktions-Funktion des zweiten Produktions-Moduls an dem Produkt wirken kann, wenn es sich im Wechselwirkungsbereich befindet.

14. Verfahren gemäß Anspruch 13,
**dadurch gekennzeichnet,**
**dass** nach der Kopplung des ersten und zweiten Produktionsmoduls weiterhin
- die erste Selbstbeschreibungs-Information des ersten Produktionsmoduls und/oder die erste Port-Information an das zweite Produktionsmodul übertragen wird, und
- durch das zweite Produktionsmodul eine zweite Port-Information (150, 151, 152, 153, 154, 250, 350) bezüglich der Kopplung zum ersten Produktionsmodul ermittelt und im zweiten Produktionsmodul gespeichert wird.

15. Verfahren gemäß Anspruch 13 oder 14,
**dadurch gekennzeichnet,**
**dass** die Ermittlung der zweiten Port-Information die Ermittlung einer Information über einen räumlichen Wechselwirkungsbereich (540) des ersten Produktionsmoduls mit dem zweiten Produktionsmodul umfasst, wobei der Wechselwirkungsbereich **dadurch gekennzeichnet ist, dass** sowohl die erste Produktions-Funktion des ersten Produktionsmoduls als auch die zweite Produktions-Funktion des zweiten Produktions-Moduls an dem Produkt wirken kann, wenn es sich im Wechselwirkungsbereich befindet.

16. Verfahren gemäß einem der Ansprüche 13 bis 15,
**dadurch gekennzeichnet,**
**dass** nach der Ermittlung der Information über den räumlichen Wechselwirkungsbereich die relative Lage des ersten zum zweiten Produktionsmodul verändert wird und dann erneut die Information bezüglich des räumlichen Wechselwirkungsbereichs gemäß dem Verfahren nach einem der Ansprüche 13 bis 15 ermittelt wird.

17. Verfahren gemäß einem der Ansprüche 13 bis 16,
**dadurch gekennzeichnet,**
**dass** das erste und zweite Produktionsmodul jeweils gemäß einem der Ansprüche 1 bis 8 ausgebildet und eingerichtet sind.

18. Verfahren gemäß einem der Ansprüche 13 bis 17,
**dadurch gekennzeichnet,**
**dass** das Koppeln des ersten mit dem zweiten Produktionsmodul derart erfolgt, dass die relative Anordnung der gekoppelten Produktionsmodule einer vorgegebenen oder vorgebbaren räumlichen oder flächigen Struktur entspricht.

19. Verfahren gemäß Anspruch 18,
**dadurch gekennzeichnet,**
**dass** Mittel zur Erreichung oder Einhaltung der vorgegebenen oder vorgebbaren Struktur vorgesehen sind, und
**dass** das Koppeln des ersten mit dem zweiten Produktionsmodul unter Verwendung dieser Mittel derart erfolgt, dass die relative Anordnung der gekoppelten Produktionsmodulen der vorgegebenen oder vorgebbaren räumlichen oder flächigen Struktur entspricht.

## Claims

1. Production module (110, 210, 310, 411, 412, 413, 421, 422, 423, 431, 432, 433) for performing a production function on a product (500),
wherein
the production module is designed and set up for coupling to a second production module (110, 210, 310, 411, 412, 413, 421, 422, 423, 431, 432, 433) or is coupled to a second production module (110, 210, 310, 412, 413, 421, 422, 423, 431, 432, 610, 710), wherein the second production module is designed and set up for performing a second production function on the product (500),
wherein a memory device (120, 220, 320) of the production module stores a piece of self-description information (130, 140, 160, 170, 230, 240, 260, 270, 330, 340, 360, 370) regarding properties of the production module,
in that the second production module comprises a second piece of self-description information (130, 140, 160, 170, 230, 240, 260, 270, 330, 340, 360, 370) regarding properties of the second production module, and
wherein the production module is designed and set up for transmitting the piece of self-description information to the second production module and for receiving the second piece of self-description information from the second production module,
**characterized**
**in that** the memory device of the production module stores a piece of port information (150, 151, 152, 153, 154, 250, 350) regarding the coupling to the second production module, or the production module is designed and set up for storing a piece of port information regarding the coupling to the second production module, and
**in that** the piece of port information (150, 151, 152, 153, 154, 250, 350) regarding the coupling to the second production module comprises a piece of information about a three-dimensional interaction area (540) of the production module with the second production module, wherein the interaction area (540) is configured such that both the production function of the production module and the second production function of the second production module can influence the product when it is located in the interaction area (540).

2. Production module according to Claim 1,
**characterized**
**in that** the piece of port information (150, 151, 152, 153, 154, 250, 350) comprises a piece of information about a geometry of the interaction area (540) and/or a position of the interaction area (540).

3. Production module according to Claim 1 or 2,
**characterized**
**in that** the production module is designed and set up for ascertaining the three-dimensional interaction area (540) of the production module with the second production module (110, 210, 310, 411, 412, 413, 421, 422, 423, 431, 432, 433).

4. Production module according to one of Claims 1 to 3,
**characterized**
**in that** the piece of information about the three-dimensional interaction area (540) of the production module with the second production module comprises a piece of information about a geometry of the interaction area and/or a position of the interaction area.

5. Production module according to one of Claims 1 to 4,
**characterized**
**in that** the piece of port information (150, 151, 152, 153, 154, 250, 350) regarding the coupling to the second production module comprises information regarding properties of the second production module, particularly regarding the second production function of the second production module.

6. Production module according to one of Claims 1 to 5,
**characterized**
**in that** the piece of port information (150, 151, 152, 153, 154, 250, 350) regarding the coupling to the second production module comprises information regarding properties of further production modules (110, 210, 310, 411, 412, 413, 421, 422, 423, 431, 432, 433) directly and/or indirectly connected to the second production module, particularly regarding production functions of production modules (110, 210, 310, 411, 412, 413, 421, 422, 423, 431, 432, 433) directly and/or indirectly connected to the second production module.

7. Production module according to one of Claims 1 to 6,
**characterized**
**in that** the piece of self-description information (130, 140, 160, 170, 230, 240, 260, 270, 330, 340, 360, 370) additionally comprises:
- a piece of configuration information (130, 131, 132, 133, 230, 330) regarding a situation and/or embodiment of the production module,
- a piece of capability information (140, 141, 142, 143, 144, 145, 146, 240, 340) regarding available functions and services of the production module, which piece of capability information comprises a piece of information about the production function,
- a piece of instruction information (160, 161, 162, 260, 360) regarding instructions executable by the production module and adjustable parameters, and/or
- a piece of state information (170, 171, 172, 270, 370) regarding an operating state of the production module.

8. Production module according to one of the preceding claims,
**characterized**
**in that** the piece of port information stored in the production module regarding the coupling to the second production module comprises information regarding properties of a third production module (110, 210, 310, 411, 412, 413, 421, 422, 423, 431, 432, 433) coupled to the second production module, particularly regarding a third production function of the third production module,
wherein the third production module is coupled to the second production module, the third production module stores or can store a third piece of self-description information (130, 140, 160, 170, 230, 240, 260, 270, 330, 340, 360, 370) regarding properties of the third production module, and the third production module is designed and set up for performing the third production function on the product.

9. Production system (100, 400) for manufacturing an intermediate product or end product, comprising a plurality of production modules (110, 210, 310, 411, 412, 413, 421, 422, 423, 431, 432, 433) coupled to one another at least in part according to one of the preceding claims, wherein each of the plurality of production modules is designed and set up according to one of the preceding claims.

10. Production system according to Claim 9,
**characterized**
**in that** each of the production modules stores a piece of port information (150, 151, 152, 153, 154, 250, 350) according to one of Claims 1 to 8 for each production module directly coupled to this production module from the plurality of production modules.

11. Production system according to Claim 9 or 10,
**characterized**
**in that** a relative arrangement of the plurality of coupled production modules corresponds to a prescribed or prescribable three-dimensional and/or two-dimensional structure.

12. Production system according to Claim 11,
**characterized**
**in that** means for attaining or observing the prescribed or prescribable structure are provided.

13. Method for coupling a first production module (110, 210, 310, 411, 412, 413, 421, 422, 423, 431, 432, 433) to a second production module (110, 210, 310, 411, 412, 413, 421, 422, 423, 431, 432, 433),
wherein the first production module is designed and set up for performing a first production function on a product (500) and the second production module is designed and set up for performing a second production function on the product (500), and additionally
the first production module stores a first piece of self-description information (130, 140, 160, 170, 230, 240, 260, 270, 330, 340, 360, 370) regarding properties of the first production module and the second production module stores a second piece of self-description information (130, 140, 160, 170, 230, 240, 260, 270, 330, 340, 360, 370) regarding properties of the second production module,
**characterized by** the steps of:
- coupling the first and second production modules,
- transmitting the second piece of self-description information of the second production module to the first production module, and
- ascertaining a first piece of port information (150, 151, 152, 153, 154, 250, 350) regarding the coupling to the second production module by means of the first production module and storing the first piece of port information in the first production module,
wherein the ascertainment of the first piece of port information comprises the ascertainment of a piece of information about a three-dimensional interaction area (540) of the first production module with the second production module, wherein the interaction area is configured such that both the first production function of the first production module and the second production function of the second production module can influence the product when it is located in the interaction area.

14. Method according to Claim 13,
**characterized**
**in that** the coupling of the first and second production modules is additionally followed by
- the first piece of self-description information of the first production module and/or the first piece of port information being transmitted to the second production module, and
- the second production module ascertaining a second piece of port information (150, 151, 152, 153, 154, 250, 350) regarding the coupling to the first production module and storing said information in the second production module.

15. Method according to Claim 13 or 14,
**characterized**
**in that** the ascertainment of the second piece of port information comprises the ascertainment of a piece of information about a three-dimensional interaction area (540) of the first production module with the second production module, wherein the interaction area is **characterized in that** both the first production function of the first production module and the second production function of the second production module can influence the product when it is located in the interaction area.

16. Method according to one of Claims 13 to 15,
**characterized**
**in that** the ascertainment of the piece of information about the three-dimensional interaction area is followed by the relative situation of the first production module in relation to the second production module being changed and then the piece of information regarding the three-dimensional interaction area being ascertained again using the method according to one of Claims 13 to 15.

17. Method according to one of Claims 13 to 16,
**characterized**
**in that** the first and second production modules are each designed and set up according to one of Claims 1 to 8.

18. Method according to one of Claims 13 to 17,
**characterized**
**in that** the first production module is coupled to the second such that the relative arrangement of the coupled production modules corresponds to a prescribed or prescribable three-dimensional or two-dimensional structure.

19. Method according to Claim 18,
**characterized**
**in that** means for attaining or observing the prescribed or prescribable structure are provided, and
**in that** the first production module is coupled to the second using these means such that the relative arrangement of the coupled production modules corresponds to the prescribed or prescribable three-dimensional or two-dimensional structure.

## Revendications

1. Module de production (110, 210, 310, 411, 412, 413, 421, 422, 423, 431, 432, 433) pour exécuter une fonction de production au niveau d'un produit (500),
dans lequel
le module de production est conçu et disposé pour le couplage à un deuxième module de production (110, 210, 310, 411, 412, 413, 421, 422, 423, 431, 432, 433) ou est couplé à un deuxième module de production (110, 210, 310, 412, 413, 421, 422, 423, 431, 432, 610, 710), dans lequel le deuxième module de production est conçu et disposé pour exécuter une deuxième fonction de production au niveau du produit (500),
dans lequel une information d'auto-description (130, 140, 160, 170, 230, 240, 260, 270, 330, 340, 360, 370) relative à des propriétés du module de production est enregistrée dans un dispositif de mémoire (120, 220, 320) du module de production,
dans lequel le deuxième module de production comprend une deuxième information d'auto-description (130, 140, 160, 170, 230, 240, 260, 270, 330, 340, 360, 370) relative à des propriétés du deuxième module de production, et
dans lequel le module de production est conçu et disposé pour transmettre l'information d'auto-description au deuxième module de production et pour recevoir la deuxième information d'auto-description du deuxième module de production,
**caractérisé en ce**
**qu'**une information de port (150, 151, 152, 153, 154, 250, 350) relative au couplage avec le deuxième module de production est enregistrée dans le dispositif de mémoire du module de production ou bien le module de production est conçu et disposé pour enregistrer une information de port relative au couplage avec le deuxième module de production, et
**que** l'information de port (150, 151, 152, 153, 154, 250, 350) relative au couplage avec le deuxième module de production comprend une information sur une zone d'interaction (540) spatiale du module de production avec le deuxième module de production, dans lequel la zone d'interaction (540) est ainsi conçue que tant la fonction de production du module de production que la deuxième fonction de production du deuxième module de production peut agir au niveau du produit lorsqu'il se trouve dans la zone d'interaction (540).

2. Module de production selon la revendication 1, **caractérisé en ce**
**que** l'information de port (150, 151, 152, 153, 154, 250, 350) comprend une information sur une géométrie de la zone d'interaction (540) et/ou une position de la zone d'interaction (540).

3. Module de production selon la revendication 1 ou 2, **caractérisé en ce**
**que** le module de production est conçu et disposé pour déterminer la zone d'interaction (540) spatiale du module de production avec le deuxième module de production (110, 210, 310, 411, 412, 413, 421, 422, 423, 431, 432, 433).

4. Module de production selon l'une des revendications 1 à 3, **caractérisé en ce**
**que** l'information sur la zone d'interaction (540) spatiale du module de production avec le deuxième module de production comprend une information sur la géométrie de la zone d'interaction et/ou une position de la zone d'interaction.

5. Module de production selon l'une des revendications 1 à 4, **caractérisé en ce**
**que** l'information de port (150, 151, 152, 153, 154, 250, 350) relative au couplage avec le deuxième module de production comprend des informations relatives à des propriétés du deuxième module de production, en particulier relatives à la deuxième fonction de production du deuxième module de production.

6. Module de production selon l'une des revendications 1 à 5, **caractérisé en ce**
**que** l'information de port (150, 151, 152, 153, 154, 250, 350) relative au couplage avec le deuxième module de production comprend des informations relatives à des propriétés d'autres modules de production (110, 210, 310, 411, 412, 413, 421, 422, 423, 431, 432, 433) reliés directement et/ou indirectement au deuxième module de production, en particulier relatives à des fonctions de production de modules de production (110, 210, 310, 411, 412, 413, 421, 422, 423, 431, 432, 433) reliés directement et/ou indirectement au deuxième module de production.

7. Module de production selon l'une des revendications 1 à 6, **caractérisé en ce**
**que** l'information d'auto-description (130, 140, 160, 170, 230, 240, 260, 270, 330, 340, 360, 370) comprend en outre :
- une information de configuration (130, 131, 132, 133 230, 330) relative à une position et/ou un agencement du module de production,
- une information de capacité (140, 141, 142, 143, 144, 145, 146, 240, 340) relative à des fonctions et services disponibles du module de production, laquelle comprend une information sur la fonction de production,
- une information d'ordre (160, 161, 162, 260, 360) relative à des ordres pouvant être exécutés et des paramètres pouvant être réglés par le module de production, et/ou
- une information d'état (170, 171, 172, 270, 370) relative à un état de travail du module de production.

8. Module de production selon l'une des revendications précédentes, **caractérisé en ce**
**que** l'information de port relative au couplage avec le deuxième module de production enregistrée dans le module de production comprend des informations relatives à des propriétés d'un troisième module de production (110, 210, 310, 411, 412, 413, 421, 422, 423, 431, 432, 433) couplé au deuxième module de production, en particulier relatives à une troisième fonction de production du troisième module de production, dans lequel le troisième module de production est couplé au deuxième module de production, une troisième information d'auto-description (130, 140, 160, 170, 230, 240, 260, 270, 330, 340, 360, 370) relative à des propriétés du troisième module de production est enregistrée ou peut être enregistrée dans le troisième module de production, et le troisième module de production est conçu et disposé pour exécuter la troisième fonction de production au niveau du produit.

9. Système de production (100, 400) pour fabriquer un produit intermédiaire ou final, comprenant une pluralité de modules de production (110, 210, 310, 411, 412, 413, 421, 422, 423, 431, 432, 433) couplés au moins partiellement entre eux selon l'une des revendications précédentes, dans lequel chacun de la pluralité de modules de production est conçu et disposé selon l'une des revendications précédentes.

10. Système de production selon la revendication 9, **caractérisé en ce**
**que** dans chacun des modules de production, une information de port (150, 151, 152, 153, 154, 250, 350) selon l'une des revendications 1 à 8 est enregistrée pour chaque module de production couplé directement à ce module de production à partir de la pluralité de modules de production.

11. Système de production selon la revendication 9 ou 10, **caractérisé en ce**
**qu'**un agencement relatif de la pluralité de modules de production couplés correspond à une structure spatiale et/ou superficielle prédéfinie ou pouvant être prédéfinie.

12. Système de production selon la revendication 11, **caractérisé en ce**
**que** des moyens sont prévus pour obtenir ou maintenir la structure prédéfinie ou pouvant être prédéfinie.

13. Procédé de couplage d'un premier module de production (110, 210, 310, 411, 412, 413, 421, 422, 423, 431, 432, 433) à un deuxième module de production (110, 210, 310, 411, 412, 413, 421, 422, 423, 431, 432, 433), dans lequel le premier module de production est conçu et disposé pour exécuter une première fonction de production au niveau d'un produit (500) et le deuxième module de production est conçu et disposé pour exécuter une deuxième fonction de production au niveau du produit (500), et en outre
une première information d'auto-description (130, 140, 160, 170, 230, 240, 260, 270, 330, 340, 360, 370) relative à des propriétés du premier module de production est enregistrée dans le premier module de production et une deuxième information d'auto-description (130, 140, 160, 170, 230, 240, 260, 270, 330, 340, 360, 370) relative à des propriétés du deuxième module de production est enregistrée dans le deuxième module de production,
**caractérisé par** les étapes de :
- couplage des premier et deuxième modules de production,
- transmission de la deuxième information d'auto-description du deuxième module de production au premier module de production, et
- détermination d'une première information de port (150, 151, 152, 153, 154, 250, 350) relative au couplage avec le deuxième module de production par le premier module de production et enregistrement de la première information de port dans le premier module de production,
dans lequel la détermination de la première information de port comprend la détermination d'une information sur une zone d'interaction (540) spatiale du premier module de production avec le deuxième module de production, dans lequel la zone d'interaction est ainsi conçue que tant la première fonction de production du premier module de production que la deuxième fonction de production du deuxième module de production peut agir au niveau du produit lorsqu'il se trouve dans la zone d'interaction.

14. Procédé selon la revendication 13, **caractérisé en ce**
**qu'**après le couplage des premier et deuxième modules de production, en outre
- la première information d'auto-description du premier module de production et/ou la première information de port est/sont transmise(s) au deuxième module de production, et
- une deuxième information de port (150, 151, 152, 153, 154, 250, 350) relative au couplage avec le premier module de production est déterminée par le deuxième module de production et enregistrée dans le deuxième module de production.

15. Procédé selon la revendication 13 ou 14, **caractérisé en ce**
**que** la détermination de la deuxième information de port comprend la détermination d'une information sur une zone d'interaction (540) spatiale du premier module de production avec le deuxième module de production, dans lequel la zone d'interaction est **caractérisée en ce que** tant la première fonction de production du premier module de production que la deuxième fonction de production du deuxième module de production peut agir au niveau du produit lorsqu'il se trouve dans la zone d'interaction.

16. Procédé selon l'une des revendications 13 à 15, **caractérisé en ce**
**qu'**après la détermination de l'information sur la zone d'interaction spatiale, la position relative du premier au deuxième module de production est modifiée et ensuite de nouveau, l'information relative à la zone d'interaction spatiale est déterminée selon le procédé selon l'une des revendications 13 à 15.

17. Procédé selon l'une des revendications 13 à 16, **caractérisé en ce**
**que** les premier et deuxième modules de production sont conçus et disposés respectivement selon l'une des revendications 1 à 8.

18. Procédé selon l'une des revendications 13 à 17, **caractérisé en ce**
**que** le couplage du premier module de production avec le deuxième s'effectue en ce que l'agencement relatif des modules de production couplés corresponde à une structure spatiale ou superficielle prédéfinie ou pouvant être prédéfinie.

19. Procédé selon la revendication 18, **caractérisé en ce**
**que** des moyens sont prévus pour obtenir ou maintenir la structure prédéfinie ou pouvant être prédéfinie, et
**que** le couplage du premier module de production avec le deuxième s'effectue par l'application de ces moyens de telle façon que l'agencement relatif des modules de production couplés corresponde à une structure spatiale ou superficielle prédéfinie ou pouvant être prédéfinie.
